# EUROPÄISCHE PATENTSCHRIFT

(11) **EP 1 517 848 B1**
(45) Veröffentlichungstag und Bekanntmachung des Hinweises auf die Patenterteilung: **16.11.2005**
(21) Anmeldenummer: 03735140.0
(22) Anmeldetag: 06.06.2003
(51) Int. Cl.: B65G 13/073, B65G 47/26

(54) **ROLLENANORDNUNG FÜR EINEN STAUROLLENFÖRDERER**
ROLLER ARRANGEMENT FOR AN ACCUMULATING ROLLER CONVEYOR
ENSEMBLE ROULEAUX POUR UN TRANSPORTEUR D'ACCUMULATION A ROULEAUX

(30) Priorität: 14.06.2002 AT 9072002
(43) Veröffentlichungstag der Anmeldung: 30.03.2005
(73) Patentinhaber: TGW Transportgeräte GmbH, 4600 Wels (AT)
(72) Erfinder: WOLKERSTORFER, Christoph, A-4174 Niederwaldkirchen (AT)
(74) Vertreter: Secklehner, Günter
(86) Internationale Anmeldenummer: PCT/AT2003/000166
(87) Internationale Veröffentlichungsnummer: WO 2003/106305

(56) Entgegenhaltungen:
- EP-A- 0 372 854
- EP-A- 1 132 321
- DE-A- 2 519 374
- DE-A- 3 720 609
- DE-B- 2 117 959
- US-A- 5 810 157

## Beschreibung

Die Erfindung betrifft eine Rollenanordnung für einen Staurollenförderer, wie diese in den Oberbegriffen der Ansprüche 1 und 28, und einen Staurollenförderer, wie dieser im Oberbegriffen des Anspruches 34 beschrieben ist.

Staurollenförderer werden häufig zum drucklosen Speichern und Fördern von Stückgütern verwendet und weisen drehbar gelagerte Förderrollen auf, die zu Förderzonen zusammengefasst sind, wobei in jeder Förderzone eine Rollenanordnung eine antreib- und gegebenenfalls bremsbare Förderrolle vorgesehen ist.

Aus der EP 1 132 321 A ist ein Staurollenförderer mit einer Vielzahl von in einem Tragrahmen gehaltenen Förderrollen, die mehreren Förderzonen zugeordnet sind und in jeder Förderzone eine antreib- und bremsbare Förderrolle zugeordnet ist, die mit den übrigen Rollen derselben Förderzone gekuppelt ist, bekannt. Die antreib- und bremsbaren Förderrollen sind auf je einer feststehenden Rollenachse gehalten, auf der eine Antriebsrolle angeordnet ist, die über eine elektromechanische Kupplung mit der antreib- und bremsbaren Förderrolle kuppelbar ist, die ihrerseits mit einer elektromechanischen Bremseinrichtung versehen ist. Die einer jeden Förderzone zugeordnete und über die elektromechanische Kupplung mit der antreib- und bremsbaren Förderrolle kuppelbare Antriebsrolle ist mit einem sich über die Länge des Staurollenförderers erstreckenden, endlos umlaufenden Antriebsorgan, z.B. Riemen, Kette, in Antriebsverbindung. Die elektromechanische Kupplung ist durch einen mit der Rollenachse drehfest verbundenen Ringmagnet und einen drehfest mit der antreib- und bremsbaren Förderrolle verbundenen und axial verschiebbar an dieser gehaltenen Anker gebildet. Die Kupplungs- und Bremseinrichtung wird über, den Belegungszustand einer jeden Förderzone erfassende Sensoren, z.B. in den Bewegungsweg von Stückgütern ragende Schaltklappen, optische Lichtschranken etc., angesteuert. Diese bekannten Staurollenförderer haben sich in der Praxis bestens bewährt, ist jedoch ein erhöhter Steuerungs- und Schaltungsaufwand erforderlich.

Eine andere Ausführung einer Rollenanordnung für das Fördern eines Stückgutes entlang eines Staurollenförderers ist aus der US 5,810,157 A bekannt. Die Rollenanordnung weist eine angetriebene Welle, eine auf dieser befestigte innere Hülse und eine auf dieser Hülse über ein Reibschlusselement befestigte Förderrolle sowie eine über eine Schraubengewindeanordnung auf der inneren Hülse axial verstellbare Sicherungsmutter auf. Die Sicherungsmutter ist mit einem Klemmring und die innere Hülse mit einem radial umlaufenden Vorsprung versehen. Der Vorsprung und der Klemmring weisen komplementär zueinander ausgebildete und miteinander in Eingriff stehende Reibflächen auf. Eine zylindrische Mantelfläche des Klemmringes grenzt an eine Innenfläche der Förderrolle an. Der Reibschluss zwischen der inneren Hülse und der Förderrolle stellt sich in Abhängigkeit vom Gewicht des transportierten Stückgutes ein, sodass bei steigendem Gewicht des Stückgutes die Reibkraft zwischen der inneren Hülse und der Förderrolle ebenfalls ansteigt und die Förderrolle gemeinsam mit der inneren Hülse und der Welle angetrieben wird. Zusätzlich wird durch den Eingriff des Klemmringes mit der Innenfläche der Förderrolle ein weiterer Reibschluss bzw. eine Reibkraft erzeugt, die unabhängig vom Gewicht des transportierten Stückgutes, daher wenn das Stückgut entlang dem Staurollenförderer verschoben wird, eingestellt wird. Durch die Anordnung dieses Klemmringes können nun Gegenstände mit relativ niedrigem Gewicht transportiert werden, da nun die Antriebskraft von der angetriebenen Welle und inneren Hülse über den Klemmring auf die Förderrolle übertragen werden kann.

Aus der DE 37 20 609 A und DE 2 117 959 A ist eine Rollenanordnung für einen Staurollenförderer bekannt, die eine in einem Tragrahmen des Staurollenförderers auf einer feststehenden Rollenachse drehbar gelagerte, antreibbare Förderrolle und ein auf einer Seite der Rolle angeordnetes Antriebsrad, insbesondere ein Kettenrad, sowie zwischen der Förderrolle und dem Antriebsrad eine ab einem bestimmten Drehmoment ein Rutschen der Förderrolle gegenüber dem Antriebsrad zulassende Kupplung mit zwei relativ zueinander verstellbaren Kupplungsteilen aufweist. Nach der DE 37 20 609 A ist einer der koaxialen Kupplungsteile mit einer konischen Anlagefläche versehen, der mit einer koaxialen Ausnehmung mit konischer Innenfläche des weiteren Kupplungsteiles in Eingriff bringbar ist. Der zumindest eine, auf der Rollenachse axial bewegliche Kupplungsteil ist über ein Federelement gegen den weiteren Kupplungsteil angepreßt. Das übertragbare Reibmoment vom Kettenrad auf die Förderrolle hängt im wesentlichen ab von der Vorspannung des Federelementes.

Weiters ist aus der EP 0 372 854 A1 ist eine Rollenanordnung bekannt, die eine im Tragrahmen drehbar gelagerte Welle und eine mit der Welle drehfest verbundene Förderrolle und ein auf der Welle drehbar gelagertes Kettenrad sowie eine Kupplungseinrichtung zwischen der Welle und dem Kettenrad aufweist. Die Kupplungseinrichtung ist als Rutschkupplung ausgebildet und weist zwei miteinander in Reibeingriff stehende Kupplungsteile mit komplementär ausgebildeten Kupplungsflächen auf. Der erste Kupplungsteil ist koaxial zur Welle angeordnet und mit dem Antriebsrad drehfest verbunden und der zweite Kupplungsteil auf der Welle axial verstellbar angeordnet. Die Kupplungsfläche des zweiten Kupplungsteiles wird gegen die Kupplungsfläche des ersten Kupplungsteiles mit einer konstanten Federkraft angepresst. Bei Übersteigen eines auf die Federkraft eingestellten Drehmomentenwertes wird der Reibschluss zwischen den beiden Kupplungsteilen gelöst und rutscht der erste Kupplungsteil gegenüber dem zweiten Kupplungsteil durch.

Eine Rollenanordnung für einen Staurollenförderer ist aus der weiteren DE 25 19 374 A bekannt, die ein auf einer feststehenden Rollenachse angeordnetes Treibrad und eine von diesem über eine Klauenkupplung an- und abkuppelbare Förderrolle aufweist. Die Kupplung umfasst ein durch einen Kupplungshebel axial zur Rollenachse verschiebbares Kupplungsglied und ein Gegenkupplungsglied. Der aus dem Stand der Technik bekannten Rollenanordnung haftet der Nachteil an, dass die komplementär ausgebildeten Kupplungsteile zur Antriebsverbindung zwischen dem Treibrad und der antreibbaren Förderrolle nur in vorbestimmten Abständen eingekuppelt werden können.

Alle jene Rollenanordnungen, bei der zwischen der Antriebsrolle und der antreibbaren Förderrolle über ein Federelement gegeneinander gepresste, reibschlüssig wirkende Kupplungsteile angeordnet sind, haftet der Nachteil an, dass zum Erreichen eines schlupffreien Antriebes zwischen der Antriebsrolle und der antreibbaren Förderrolle das die Andruckkraft zwischen den Kupplungsteilen erzeugende Federelement auf ein maximal zu transportierendes Gewicht des Stückgutes auszulegen ist, wodurch für die Verstellung zumindest eines Kupplungsteiles von einer eingerückten Schaltstellung in eine ausgerückte Schaltstellung eine hohe Schaltkraft erforderlich ist, die von dem die Schaltklappe niederdrückenden und die Schaltkraft einleitenden Stückgut aufzubringen ist. Dadurch muss das zu transportierende Stückgut ein hohes Mindestgewicht aufweisen, um die Kupplungseinrichtung schalten zu können. Somit muss sowohl die Kupplungseinrichtung als auch die Verstellvorrichtung, wie Schaltklappen, Schaltgestänge, Schaltelemente etc., robust ausgelegt werden und können derartige bekannte Staurollenförderer durch ihre systembedingte Trägheit nur ein eingeschränktes Einsatzfeld abdecken.

Der vorliegenden Erfindung liegt die Aufgabe zugrunde, eine Rollenanordnung für einen Staurollenförderer zu schaffen, mit der der aus dem Stand der Technik bekannte Nachteil der hohen Schaltkraft für die Betätigung der Kupplungseinrichtung vermieden und das Antriebsmoment von der Antriebsrolle auf die Förderrolle zuverlässig übertragen wird, und die sich durch einen einfachen Aufbau auszeichnet. Unabhängig davon ist es Aufgabe der Erfindung, den ohnehin vorhandenen Raum in der Antriebs- und Förderrolle besser auszunutzen und soll ein Einsatz der Rollenanordnung auch unter schwierigsten Bedingungen uneingeschränkt ermöglicht werden.

Die Aufgabe der Erfindung wird durch die im Kennzeichenteil des Anspruches 1 wiedergegebenen Merkmale gelöst. Die überraschenden Vorteile dabei sind, dass zwischen der Förderrolle und dem ersten Kupplungsteil eine lastmomentabhängige und selbstnachstellende Stellvorrichtung angeordnet ist, über die der erste Kupplungsteil mit einer die auf das Mindestgewicht des zu transportierenden Stückgutes ausgelegte, niedrige Federkraft übersteigenden, auf das Gewicht des zu transportierenden Stückgutes einstellenden Andruckkraft gegen den weiteren Kupplungsteil angepreßt werden kann, wodurch einerseits ein schlupffreier Eingriff zwischen den Kupplungsteilen bzw. Antrieb von der Antriebsrolle auf die Förderrolle, selbst beim Transport von Stückgütern mit stark unterschiedlichen Gewichten möglich ist und andererseits die zum Auskuppeln eines der Kupplungsteile erforderliche Schaltkraft niedrig gehalten werden kann. Vorteilhaft ist auch die Anordnung der Kupplungseinrichtung und der lastabhängigen Stellvorrichtung innerhalb und zwischen der Antriebs- und Förderrolle, wodurch diese über ihre gesamte Einsatzdauer geschützt vor äußeren Einflüssen, wie Verschmutzungen, sind und der ohnehin in der Antriebs- und Förderrolle vorhandene Innenraum besser ausgenutzt werden kann.

Die Ausführung nach Anspruch 2 ermöglicht eine kleinbauende Ausführung der Rollenanordnung und eine zuverlässige Betätigung der Kupplungseinrichtung.

Von Vorteil ist die Ausgestaltung nach Anspruch 3, wodurch auf einfache Art und Weise in Abhängigkeit des Gewichtes der zu fördernden Stückgüter eine stufenlose Veränderung der Andruckkraft in den Grenzen von einem Mindestgewicht und Maximalgewicht des Stückgutes erreicht wird. Ferner ist von Vorteil, dass ohne Fremdenergie, daher antriebslos, zumindest eines der beiden Übertragungselemente in Abhängigkeit vom Gewicht des Stückgutes selbsttätig soweit verstellt wird, dass sich ein Gleichgewicht zwischen dem Antriebsmoment der Antriebs- und Förderrolle einstellt und ein schlupffreier Antrieb von der Antriebs- auf die Förderrolle möglich ist. Durch diese selbstnachstellende Wirkung der Stellvorrichtung kann der reibungsbedingte Verschleiß der Kupplungseinrichtung stark reduziert und die Lebensdauer derselben angehoben werden.

Bei der Ausgestaltung nach Anspruch 4 ist von Vorteil, dass die ineinander angeordneten und relativ zueinander verstellbaren Übertragungselemente der Stellvorrichtung in der standardmäßigen Förderrolle eingesetzt sind, wodurch ein einfacher Aufbau der Stellvorrichtung möglich ist.

Durch die Ausbildung nach Anspruch 5 kann eine einfache Herstellung des Übertragungselementes, z.B. im Spritzgußverfahren, erzielt werden.

Gemäß Anspruch 6 wird die Anzahl der Einzelbauteile weiters reduziert und wird eine kompakte Bauweise erreicht.

Möglich ist auch eine Ausbildung nach Anspruch 7, da durch den modularen Aufbau der Stellvorrichtung und Kupplungseinrichtung eine einfache Austauschbarkeit der einzelnen Bauteile ermöglicht wird. Der erste Kupplungsteil ist dabei auf der Rollenachse axial verschiebbar und/oder in Umfangsrichtung desselben drehbar gelagert.

Die Ausgestaltung nach Anspruch 8 ermöglicht einerseits die selbsttätige Nachstellung der Andruckkraft des ersten Kupplungsteiles gegen den weiteren Kupplungsteil und/oder andererseits kann bei Überschreiten eines einstellbaren Maximalwertes des übertragbaren Drehmomentes zwischen den Übertragungselementen oder zumindest einem Übertragungselement und dem ersten Kupplungsteil, z.B. wenn Stückgüter mit unzulässigem Gewicht transportiert werden, das Überlastmoment über die sich in Eingriff befindlichen Übertragungselemente zerstörungsfrei übertragen werden. In diesem gesetzten Fall bildet die die zumindest zwei Übertragungselemente aufweisende Stellvorrichtung eine Sicherheitskupplung aus.

Von Vorteil sind aber auch die Ausbildungen nach den Ansprüchen 9 und 10, da über die einfach herzustellende Schrägverzahnung die variable, an das zu transportierende Gewicht des Stückgutes selbstanpassende Andruckkraft eingestellt werden kann.

Nach den vorteilhaften Weiterbildungen nach den Ansprüchen 11 und 12 wird eine einfache Herstellung der Übertragungselemente mit den komplementär ausgebildeten Längsnuten und/oder Zahnelementen erzielt.

Durch die Weiterbildungen nach den Ansprüchen 13 bis 15 kann eine Übersetzung des Kraftverhältnisses zwischen einer lastabhängigen Tangentialkraft des Stückgutes und der zwischen den beiden Kupplungsteilen wirkenden Andruckkraft optimiert eingestellt werden.

Gemäß Anspruch 16 wird sichergestellt, dass die ineinander nach der Art einer Schraubenlinie geführt verstellbaren Übertragungselemente sowohl in der eingerückten als auch in der ausgerückten Schaltstellung bewegungsverbunden, insbesondere drehfest miteinander verbunden sind und kurzzeitig auf die Momentenschwankungen, ausgelöst durch die transportierten Stückgüter mit unterschiedlichen Gewichten, reagiert werden kann.

Die Ausgestaltung nach Anspruch 17 trägt zum robusten Aufbau der Rollenanordnung bei.

Die Weiterbildung nach Anspruch 18 erlaubt eine platzsparende Unterbringung des Federelementes und wird die Kraftkomponente und die auf das Gewicht des Stückgutes einstellende Axialkraft zentrisch auf den ersten Kupplungsteil übertragen, wodurch der reibungsbedingte Verschleiß infolge eines einseitigen Eingriffes zwischen den Kupplungs- bzw. Reibflächen der beiden Kupplungsteile vermieden werden kann.

Vorteilhaft ist aber auch die Ausbildung nach den Ansprüchen 19 und 21, da beispielsweise das verstellbare, erste Übertragungselement einen Bremsfortsatz aufweist, der bei der Verstellung des ersten Kupplungsteiles von seiner eingerückten Schaltstellung in eine ausgerückte Schaltstellung mit einem beispielsweise auf der Rollenachse festsitzenden Bremsklotz in Eingriff verbracht wird und das sich auf der Rollenanordnung zum Teil abstützende Stückgut selbst bei hohen Vorschubgeschwindigkeiten rasch abgebremst und bei dicht aneinanderliegend, aufzustauenden Stückgütern der Aufprall zwischen zweier hintereinander aufzustauender Stückgüter gering gehalten werden kann und Beschädigungen an den Stückgütern vermieden werden. Weiters ist von Vorteil, dass der Bremsfortsatz gleichzeitig als Führung für das zumindest eine Federelement, insbesondere die zylindrische Druckfeder, dient.

Eine Ausgestaltung nach Anspruch 22 trägt zur robusten Konstruktion der Rollenanordnung bei.

Gemäß einer Ausbildung nach Anspruch 23 und 24 ist ein optimaler Öffnungswinkel der komplementär ausgebildeten Kupplungsflächen der miteinander in Eingriff bringbaren Kupplungsteile gefunden.

Von Vorteil sind auch die Weiterbildungen nach den Ansprüchen 25 bis 27, wodurch über die Stellvorrichtung eine vom Gewicht des zu transportierenden Stückgutes abhängige Andruckkraft zwischen den beiden Kupplungsteilen selbsttätig bis zum Erreichen eines schlupffreien Reibeingriffes eingestellt wird. Ferner zeichnet sich die Stellvorrichtung durch ihre kleine Baugröße aus, sodass diese innerhalb der bevorzugt mit einem Normdurchmesser, von beispielsweise 50 mm ausgebildeten Förderrolle untergebracht werden kann.

Die Aufgabe der Erfindung wird aber auch durch die im Kennzeichenteil des Anspruches 28 beschriebenen Merkmale gelöst. Der überraschende Vorteil ist, dass durch die Integration der Kupplungsteile der Kupplungseinrichtung in der Antriebs- und/oder Förderrolle die Schaltwege für die Verstellung zumindest eines Kupplungsteiles gegenüber den weiteren Kupplungsteilen von einer ausgerückten in eine eingerückte Schaltstellung niedrig gehalten werden können und durch das Fernhalten von Verschmutzungen an der Kupplungseinrichtung eine hohe Zuverlässigkeit der Funktionsweise derselben möglich ist.

Von Vorteil ist die Ausbildung nach Anspruch 29, wodurch eine Schaltkraft der Verstellvorrichtung unmittelbar von einem Schalthebel auf einen die Übertriebsrolle drehbar lagernden Stellhebel übertragen und der Verstellweg weiters reduziert wird.

Vorteilhaft erweisen sich auch die Ausgestaltungen nach den Ansprüchen 30 bis 32, wodurch selbst bei einer niedrigen Andruckkraft der Übertriebsrolle an der Kupplungsfläche der Antriebs- und Förderrolle schlupffrei das Antriebsmoment von der Antriebsrolle auf die Förderrolle übertragen werden kann.

Auch die Ausgestaltung nach Anspruch 33 ist von Vorteil, da die Übertriebsrolle bereits bei niedrigen Schwenkwinkeln von der eingerückten Schaltstellung in eine ausgerückte Schaltstellung verstellbar ist und niedrige Schaltzeiten dadurch möglich sind.

Schließlich wird die Aufgabe der Erfindung aber auch durch die im Kennzeichenteil des Anspruches 34 beschriebenen Merkmale gelöst. Der überraschende Vorteil ist, dass die mit obengenannten Vorteilen einsetzbare Rollenanordnung zu einem einfachen Aufbau des Staurollenförderers beiträgt und die für das Schalten der Kupplungseinrichtung erforderliche Schaltkraft erheblich verringert wird und die die Schaltkraft einleitende Verstellvorrichtung kleiner dimensioniert werden kann.

Die Erfindung wird im nachfolgenden anhand der in den Zeichnungen dargestellten Ausführungsbeispiele näher erläutert.

Es zeigen:
- Fig. 1: schematisch einen Ausschnitt eines erfindungsgemäße Staurollenförderers, in Seitenansicht;
- Fig. 2: den Staurollenförderer nach Fig. 1 in Draufsicht und in stark vereinfachter, schematischer Darstellung;
- Fig. 3: eine erfindungsgemäße Rollenanordnung einer Förderzone des Staurollenförderers, mit der Antriebsrolle und Förderrolle und einer zwischen diesen angeordneten Kupplungseinrichtung in eingerückter Schaltstellung, geschnitten gemäß den Linien III-III in Fig. 2 und in stark vereinfachter, schematischer Darstellung;
- Fig. 4: eine Förderrolle und eine Stellvorrichtung mit sich in Eingriff befindlichen Übertragungselementen, geschnitten gemäß den Linien IV - IV in Fig. 3;
- Fig. 5: die Rollenanordnung nach Fig. 3 mit der Kupplungseinrichtung in ausgerückter Schaltstellung, im Längsschnitt und stark vereinfachter schematischer Darstellung;
- Fig. 6: eine schematisch dargestellte Antriebsrolle und einen Teilbereich der Förderrolle und die zwischen diesen angeordnete Kupplungseinrichtung in eingerückter Schaltstellung, sowie die zwischen der Kupplungseinrichtung, insbesondere dem ersten Kupplungsteil und der Förderrolle angeordnete Stellvorrichtung , im Längsschnitt und in stark vereinfachter, schematischer Darstellung;
- Fig. 7: eine schematisch dargestellte Antriebsrolle und einen Teilbereich der Förderrolle und die zwischen diesen angeordnete Kupplungseinrichtung in ausgerückter Schaltstellung sowie die zwischen der Kupplungseinrichtung, insbesondere dem ersten Kupplungsteil und der Förderrolle angeordnete Stellvorrichtung , im Längsschnitt und in stark vereinfachter, schematischer Darstellung;
- Fig. 8: das erfindungsgemäße erste Übertragungselement mit dem ersten Kupplungsteil in Ansicht und in stark vereinfachter, schematischer Darstellung;
- Fig. 9: das Übertragungselement mit dem Kupplungsteil in Ansicht gemäß Pfeil IX in Fig. 8;
- Fig. 10: eine andere Ausgestaltung der erfindungsgemäßen Rollenanordnung und eine weitere Ausführung der Stellvorrichtung mit ihren sich miteinander in Eingriff befindlichen Übertragungselementen und die Kupplungseinrichtung, teilweise geschnitten und in stark vereinfachter, schematischer Darstellung;
- Fig. 11: eine weitere Ausführungsvariante der erfindungsgemäßen Rollenanordnung mit einer anderen Ausführung der Stellvorrichtung mit ihren sich miteinander in Eingriff befindlichen Übertragungselementen und die Kupplungseinrichtung, im Längsschnitt und in stark vereinfachter, schematischer Darstellung;
- Fig. 12: das erste Übertragungselement mit dem mit diesem verbundenen ersten Kupplungsteil, in Stirnansicht und in stark vereinfachter, schematischer Darstellung;
- Fig. 13: eine Ansicht in Richtung der Pfeile XIII - XIII in Fig. 12 eines Teils einer Verzahnung des Übertragungselementes, in stark vereinfachter und schematischer Darstellung;
- Fig. 14: eine andere Ausgestaltung der erfindungsgemäßen Rollenanordnung mit einer sich in ausgerückter Schaltstellung befindlichen Kupplungseinrichtung, geschnitten gemäß den Linien XIV -XIV in Fig. 22 und in stark vereinfachter, schematischer Darstellung;
- Fig. 15: die Kupplungseinrichtung in ausgerückter Schaltstellung und die Förderrolle, nach Fig. 14, in Stirnansicht, teilweise geschnitten und in stark vereinfachter, schematischer Darstellung;
- Fig. 16: die Kupplungseinrichtung in eingerückter Schaltstellung und die Förderrolle, nach Fig. 14, in Stirnansicht, teilweise geschnitten und in stark vereinfachter, schematischer Darstellung;
- Fig. 17: eine weitere Ausführungsvariante der erfindungsgemäßen Rollenanordnung im Längsschnitt und in stark vereinfachter, schematischer Darstellung;
- Fig. 18: die Kupplungseinrichtung in ausgerückter Schaltstellung, eine Treibrolle und die Förderrolle, geschnitten gemäß den Linien XVIII - XVIII in Fig. 17, in stark vereinfachter, schematischer Darstellung;
- Fig. 19: die Kupplungseinrichtung in eingerückte Schaltstellung, die Treibrolle und die Förderrolle, nach Fig. 17, in Stirnansicht geschnitten, und in stark vereinfachter schematischer-Darstellung;
- Fig. 20: einen Ausschnitt einer anderen Ausgestaltung der erfindungsgemäßen Rollenanordnung mit einer weiteren Ausführungsvariante der Stellvorrichtung, im Längsschnitt und in stark vereinfachter, schematischer Darstellung;
- Fig. 21: schematisch einen Ausschnitt einer weiteren Ausführung eines erfindungsgemäßen Staurollenförderers für die Rollenanordnung nach den Fig. 14 bis 19, in Seitenansicht;
- Fig. 22: den Staurollenförderer nach Fig. 21 in Draufsicht und in stark vereinfachter, schematischer Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

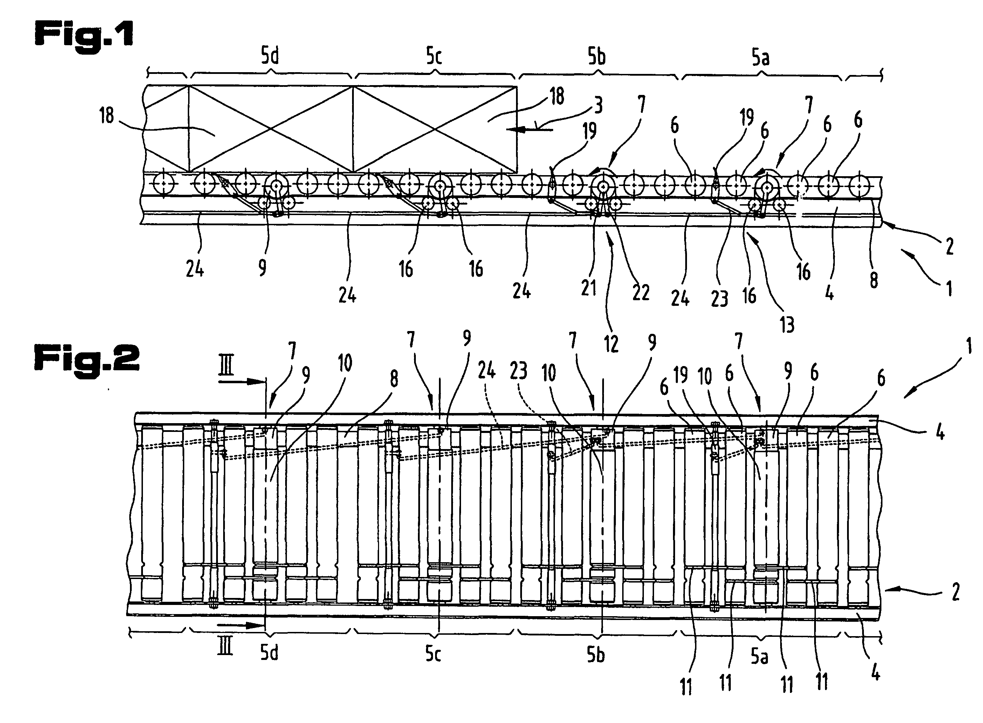

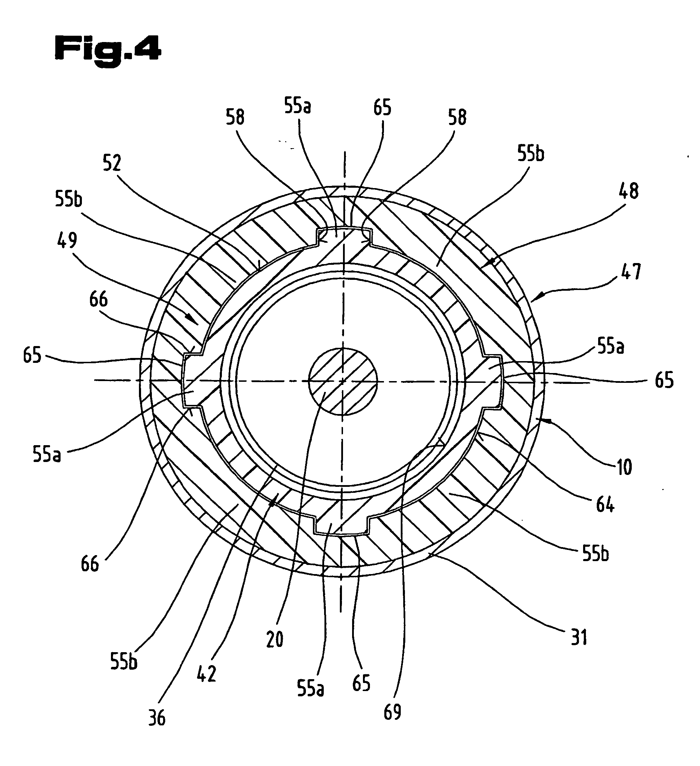

In den gemeinsam beschriebenen Fig. 1 bis 5 ist ein Ausschnitt aus einem Staurollenförderer 1 in unterschiedlichen Ansichten und eine Rollenanordnung gezeigt. Der Staurollenförderer 1 besteht aus einem Tragrahmen 2 mit zwei in Förderrichtung - gemäß Pfeil 3 - verlaufenden und den Staurollenförderer 1 seitlich begrenzenden Seitenteilen 4, die über mehrere in Förderrichtung - gemäß Pfeil 3 - gesehen voneinander beabstandet angeordnete, nicht dargestellte Querträger verbunden sind und somit auf Abstand gehalten werden. Die Seitenteile 4 sind in Form von C-förmigen Blechprofilen ausgebildet, deren Steg aufrechtstehend ausgerichtet ist. Der Staurollenförderer 1 ist in Förderrichtung - gemäß Pfeil 3 - in mehrere hintereinander ausgebildete Förderzonen 5a bis 5d unterteilt. Jede Förderzone 5a bis 5d weist eine im Tragrahmen 2, insbesondere in den Seitenteilen 4 in Förderrichtung - gemäß Pfeil 3 - zueinander beabstandet angeordnete Vielzahl von unangetriebenen Rollen 6 und zumindest eine Rollenanordnung 7 auf.

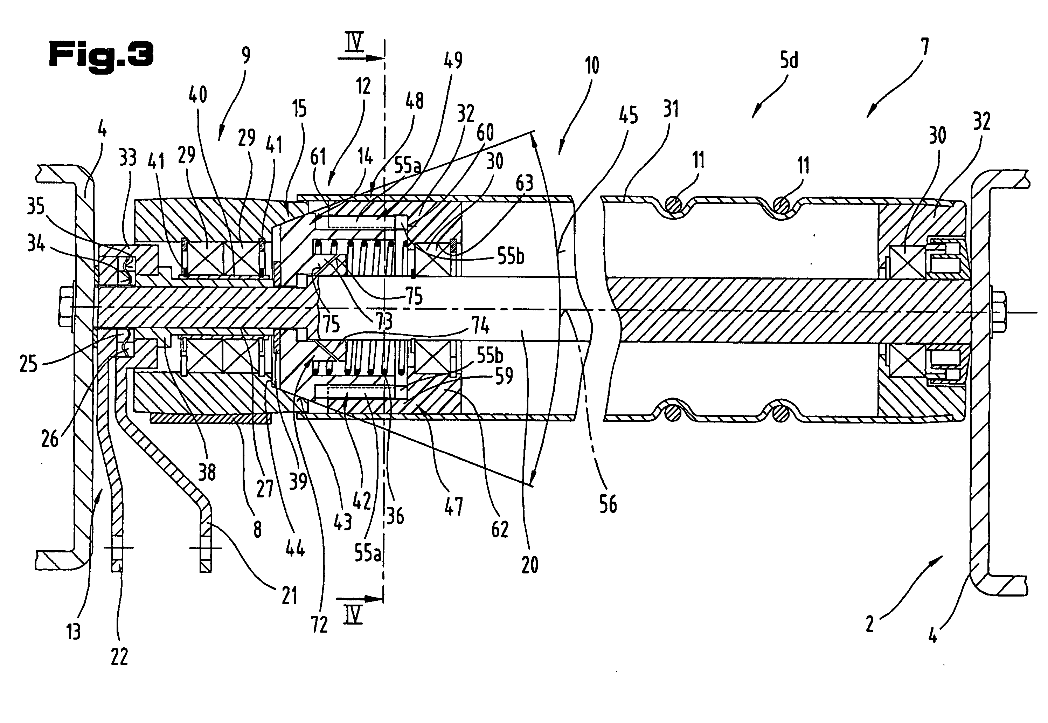

Wie noch später erläutert wird, umfasst die Rollenanordnung 7 eine über ein endlos umlaufendes, bandartiges Antriebsorgan 8, z.B. Kette, Riemen, ständig angetriebene Antriebsrolle 9, z.B. Kettenrad, Riemenscheibe, und eine antreibbare und/oder bremsbare Förderrolle 10. Die antreib- und/oder bremsbare, hohlzylindrische Förderrolle 10 ist mit umlaufenden Rillen versehen, in denen endlos umlaufende Antriebsorgane, insbesondere Riemen 11, geführt sind, die um die zwei benachbarten Förderrollen 10 umlaufen. Diese sind über weitere Riemen 11 mit weiteren Förderrollen 10 derselben Förderzone 5a; 5b; 5c; 5d antriebsverbunden. Zwischen der Antriebsrolle 9 und Förderrolle 10 ist eine mechanisch, insbesondere reibschlüssig wirkende Kupplungseinrichtung 12, insbesondere eine mechanisch betätigte Reibkupplung, z.B. Scheibenkupplung, insbesondere Zwei- oder Mehrflächenkupplung, oder Kegelkupplung, wie diese in den nachfolgenden Fig. dargestellt ist, angeordnet, die über zumindest eine Verstellvorrichtung 13 relativ zueinander verstellbare Kupplungsteile 14, 15, wie diese beispielsweise in der Fig. 3 dargestellt sind, aufweist.

Wie aus der Fig. 1 ersichtlich, wird das endlos umlaufende Antriebsorgan 8, z.B. Riemen, im Bereich einer jeden Antriebsrolle 9 der erfindungsgemäßen Rollenanordnung 7 in einer jeden Förderzone 5a bis 5d durch Andrückrollen 16 und die Antriebsrolle 9 ausgelenkt und umschließt diese in einem Winkel zwischen 10° und 30°, beispielsweise 20°.

Gemäß den Fig. 1 und 2 ist jeder Förderzone 5a bis 5d zumindest ein ein in Förderrichtung - gemäß Pfeil 3 - von der Förderzone 5a nach der Förderzone 5d transportierte Stückgut 18, z.B. ein Ladehilfsmittel, wie Karton, Palette, Kiste, etc. erfassender, mechanischer oder optischer Sensor 19, insbesondere eine in den Bewegungsweg der Stückgüter 18 hineinragende Schaltklappe oder eine photoelektrische Zelle, z.B. Lichtschranke, zugeordnet.

Die Verstellvorrichtung 13 weist im vorliegenden Ausführungsbeispiel zwei auf einer Rollenachse 20 der Rollenanordnung 7 jeder Förderzone 5a bis 5d verschwenkbeweglich gelagerte Schalthebel 21, 22 und ein den Sensor 19 der betreffenden Förderzone 5a; 5b; 5c; 5d mit dem ersten Schalthebel 21 verbindendes erstes Schaltgestänge 23 sowie ein den zweiten Schalthebel 22 der betreffenden Förderzone 5a; 5b; 5c; 5d mit der in Förderrichtung - gemäß Pfeil 3 - vorgeordneten Förderzone 5d; 5c; 5b; 5a verbindendes weiteres Schaltgestänge 24 auf. Die Schaltgestänge 23, 24 sind mit den verschwenkbaren Schaltklappen und jeweils mit den Schalthebeln 21, 22 gelenkig verbunden. Durch die Verschaltung der Förderzonen 5a bis 5d miteinander, ist eine gezielte Ansteuerung z.B. eines Stauvorganges der Stückgüter 18 entlang des Staurollenförderers 1 möglich.

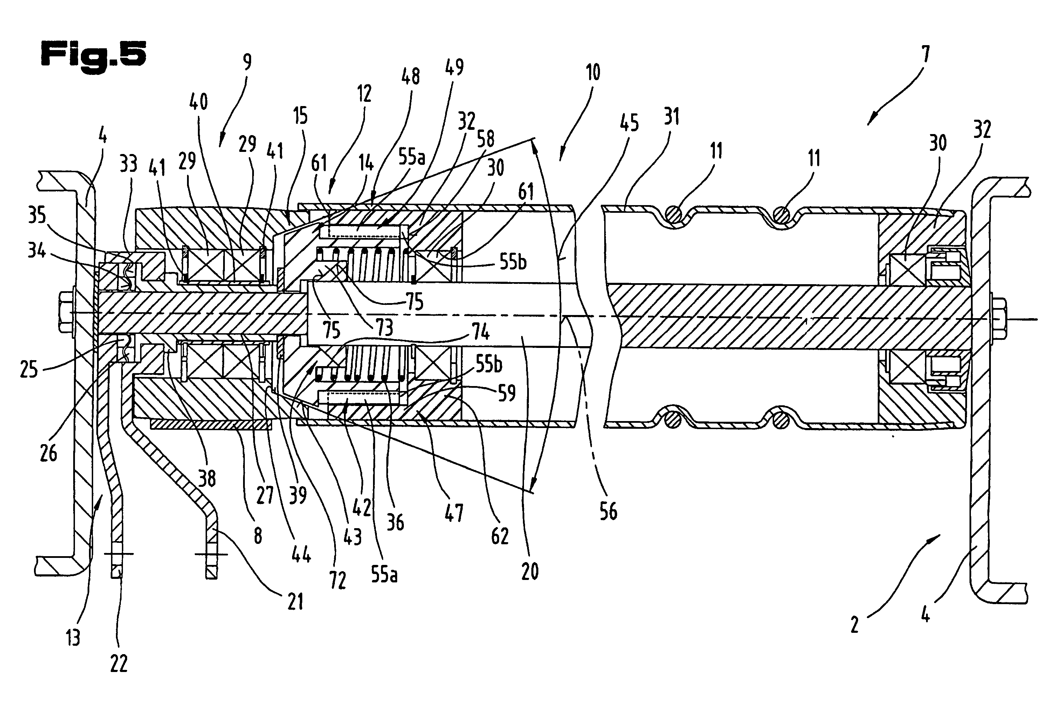

Ist, wie in der Fig. 1 eingetragen, die Förderzone 5d mit einem Stückgut 18 belegt, wird die Schaltklappe in dieser betreffenden Förderzone 5d durch das Stückgut 18 niedergedrückt und der mit der Schaltklappe der betreffenden Förderzone 5d über das Schaltgestänge 24 verbundene Schalthebel 22 in der der betreffenden Zone in Förderrichtung - gemäß Pfeil 3 - vorgeordneten Förderzone 5 c betätigt und zwischen den beiden Schalthebeln 21, 22 angeordnete, in der Fig. 3 eingetragene und noch näher zu beschreibende Fächerscheiben 25, 26 relativ zueinander verstellt und die in ihrer Grundstellung sich in einer eingerückten bzw. eingekuppelten Schaltstellung befindliche Kupplungseinrichtung 12 unbetätigt und bleibt diese solange eingekuppelt, bis ein weiteres in Förderrichtung - gemäß Pfeil 3 - antransportiertes Stückgut 18, die in der Förderzone 5 c angeordnete Schaltklappe niederdrückt. Sobald die in der Förderzone 5 c angeordnete Schaltklappe vom antransportierte Stückgut 18 niedergedrückt wird, wird der mit der Schaltklappe dieser Förderzone 5 c verbundene Schalthebel 21 und die auf der Rollenachse 20 koaxial angeordneten Fächerscheiben 25, 26, derart zueinander verstellt, dass diese in Richtung der Rollenachse 20 auseinandergedrückt und die miteinander in Reibeingriff befindlichen Kupplungsteile 14, 15 mittels eines hülsenartigen Schaltelementes 27 von einer eingerückten, eingekuppelten Schaltstellung, gemäß Fig. 3, in eine ausgerückte, ausgekuppelte Schaltstellung, gemäß Fig. 5, verstellt werden. Dabei wird die antreibbare Förderrolle 10 von der angetriebenen Antriebsrolle 9 abgekoppelt und somit die Förderrolle 10 und die weiteren in dieser Förderzone 5c angeordneten Rollen 6 sowie das Stückgut 18 in dieser Förderzone 5c in Stillstand versetzt.

Dieser Vorgang kann entlang des Staurollenförderers 1 beliebig fortgesetzt werden.

Es sei an dieser Stelle darauf hingewiesen, dass die Stückgüter 18, nicht nur, wie in der Fig. 1 eingetragen, unmittelbar aneinanderstoßend aufgestaut werden, sondern auch in einem in Förderrichtung - gemäß Pfeil 3 - horizontalen Abstand voneinander distanziert aufgestaut werden können. Dies ist dem Fachmann als staudruckloses Speichern und Fördern von Stückgütern 18 geläufig.

Wie aus der Fig. 3 besser zu entnehmen ist, ist die erfindungsgemäße Rollenanordnung 7 auf der zwischen den Seitenteilen 4 des Tragrahmens 2 gehaltenen Rollenachse 20 angeordnet, auf der die Antriebsrolle 9 und die antreib- und/oder bremsbare Förderrolle 10 über Lager 29, 30, insbesondere Kugellager, gelagert sind.

Die Förderrolle 10 besteht aus einem zylindrischen Förderrollenmantel 31 mit an seinen Stirnenden angeordneten, mit einer zur Rollenachse 20 koaxialen Bohrung versehenen Fördenollenböden 32, in denen die Lager 30 für die Förderrolle 10 gehalten sind.

Wie bereits oben beschrieben, sind die Kupplungsteile 14, 15 über die beiden auf der Rollenachse 20 verschwenkbar gelagerten Schalthebel 21, 22 relativ zueinander verstellbar ausgebildet. Der der Antriebsrolle 9 benachbarte Schalthebel 21 weist einen napfartigen Aufnahmekörper 33 auf, der am Napfboden mit einer Bohrung für die durch sie hindurchtretende Rollenachse 20 versehen ist. Der weitere dem Seitenteil 4 benachbarte Schalthebel 22 ist über die zumindest zwei Fächerscheiben 25, 26 am Schalthebel 21 abgestützt.

Jede der beiden Fächerscheiben 25; 26 ist bevorzugt mit einem der Schalthebel 21, 22 bewegungsfest verbunden. Im vorliegenden Ausführungsbeispiel ist mit dem auf der Rollenachse 20 verschwenkbar gelagerten Schalthebel 22 die Fächerscheibe 25 und Schalthebel 21 die Fächerscheibe 26 verbunden. Die Fächerscheibe 25 weist wenigstens zwei, bevorzugt vier Schaltnocken 34 auf, die in Umfangsrichtung mit gleichem Abstand voneinander angeordnet sind und über gegensinnige Keilrampen in axial zurückversetzte, parallele Anschlagflächen übergehen.

Die mit dem auf der Rollenachse 20 oder dem Schaltelement 27 verschwenkbar gelagerten und in zur Rollenachse 20 axialer Richtung verschiebbaren Schalthebel 21 verbundene Fächerscheibe 26 ist mit komplementär zur Fächerscheibe 25 ausgebildeten Schaltnocken 35, Keilrampen und Anschlagflächen versehen.

Werden die beiden Schalthebel 21, 22 in oben beschriebener Weise durch das Niederdrücken der Schaltklappen z.B. in den Förderzonen 5d und 5c gegeneinander verschwenkt, werden die in einer Grundstellung aneinanderliegenden Fächerscheiben 25, 26 mit zunehmenden Verstellwinkel der Schalthebel 21, 22 in zur Bewegungsebene der Schalthebel 21, 22 axialer Richtung entlang der Rollenachse 20 verschoben und der auf der Rollenachse 20 axial verschiebbare erste Kupplungsteil 14 von seiner eingekuppelten Schaltstellung, wie diese in der Fig. 3 ersichtlich ist, in eine ausgekuppelte Schaltstellung, wie diese in der Fig. 5 ersichtlich ist, entgegen der Wirkung zumindest eines Federelementes 36 verstellt. Zwischen dem auf der Rollenachse 20 axial verstellbaren Schalthebel 21 und dem entgegen der Wirkung der Federkraft auf der Rollenachse 20 axial verstellbaren, ersten Kupplungsteil 14 ist das auf der Rollenachse 20 gleitbeweglich gelagerte, in axialer Richtung verschiebbare und die Schaltkraft der Verstellvorrichtung 13 übertragende, hohlzylindrische bzw. rohrartige Schaltelement 27, das in der Art einer Bundhülse ausgebildet ist, angeordnet. In einem dem ersten Kupplungsteil 14 gegenüberliegenden Stirnendbereich ist ein radial umlaufender Bund 38 ausgebildet, zwischen dem und der Stirnseite am Rohrabschnitt der Schalthebel 21 verschwenkbar gelagert ist. Zweckmäßig wird zwischen dem Kupplungsteil 14 und dem Schaltelement 27 eine koaxial auf der Rollenachse 20 angeordnete Stützscheibe 39 angeordnet.

Auf dem Schaltelement 27 ist eine hohlzylindrische Gleitlagerbuchse 40 angeordnet, die über Sicherungsringe 41 und die Lager 29 gegenüber dem axial verstellbaren Schaltelement 27 und der Antriebsrolle 9 axial festgelegt ist.

Gemäß dem Ausführungsbeispiel in der Fig. 3 weist der zur Rollenachse 20 koaxiale erste Kupplungsteil 14 ein einstückig an diesem angeformtes, noch näher zu beschreibendes rotationssymmetrisches erstes Übertragungselement 42 und eine sich in Richtung der Antriebsrolle 9 konisch verjüngende Kupplungsfläche 43 auf. Der weitere komplementär zum ersten Kupplungsteil 14 ausgebildete, weitere Kupplungsteil 15 ist durch eine an einer der Förderrolle 10 zugewandten Stirnseite vertieft angeordnete Ausnehmung mit einer sich in Richtung der Förderrolle 10 konisch aufweitenden Kupplungsfläche 44 gebildet. Ein Öffnungswinkel 45 bemessen zwischen den Kupplungsflächen 43; 44 beträgt zwischen 5° und 50°, beispielsweise 30°.

Zwischen dem verschiebbaren ersten Kupplungsteil 14 und der antreib- und/oder bremsbaren Förderrolle 10 ist zumindest eine Stellvorrichtung 47 angeordnet, die im vorliegenden Ausführungsbeispiel derart ausgebildet ist, dass zumindest das erste Übertragungselement 42 koaxial innerhalb eines mit der antreib- und bremsbaren Förderrolle 10 bewegungsfest verbundenen, rotationssymmetrischen weiteren Übertragungselementes 48 angeordnet und mit diesem über eine Verzahnung 49 in Umfangsrichtung der Übertragungselemente 42, 48 drehfest und in zur Rollenachse 20 axialer Richtung gegeneinander verschiebbar sind.

Wie aus der Zusammenschau der Fig. 3 bis 9 ersichtlich, ist das nach der Art einer Schraubenlinie gegenüber dem weiteren Übertragungselement 48 verstellbare, erste Übertragungselement 42 durch einen zylindrischen Grundkörper 50 mit einer koaxial zur Rollenachse 20 verlaufenden Durchgangsöffnung 51 gebildet und von zwei Stirnseiten 53, 54 begrenzt. Ein Außenumfang 52 des ersten Übertragungselementes 42, bevorzugt der Außenumfang 52 des Grundkörpers 50 ist mit einer Außenverzahnung mit zumindest zwei, bevorzugt vier in Umfangsrichtung im gleichen Abstand voneinander angeordneten Zahnelemente 55a versehen.

Die Zahnelemente 55a weisen in Richtung einer Längsmittelachse 56 der Rollenachse 20 bzw. einer Längsmittelachse 57 des ersten Übertragungselementes 42 geneigt aufeinander zulaufende und geneigt zur Längsmittelachse 56, 57 verlaufende Keilflanken 58 oder, wie in der Fig. 8 in strichpunktierten Linien eingetragen, in Richtung der Längsmittelachse 56 der Rollenachse 20 bzw. der Längsmittelachse 57 des ersten Übertragungselementes 42 parallel zueinander und geneigt zur Längsmittelachse 56, 57 der verlaufende Keilflanken 58 auf.

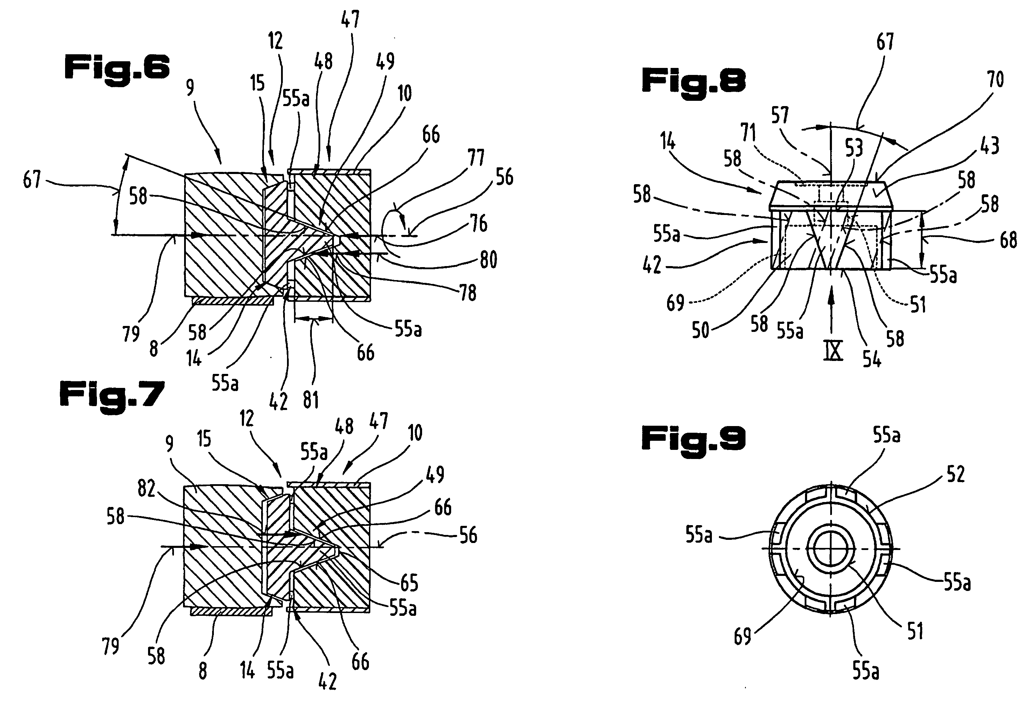

Das aus der Fig. 3 ersichtliche, topfartig ausgebildete weitere Übertragungselement 48 ist durch einen hohlzylindrischen Grundkörper 59 mit einer Innenverzahnung mit Zahnelemente 55b und einem an diesen an einer seiner Stirnseiten 60, 61 angeordneten Boden 62 gebildet. Der Boden 62 weist eine koaxial zur Rollenachse 20 verlaufende Bohrung 63 für eine Lageraufnahmestelle für das Lager 30 der Förderrolle 10 auf und sind an einem Innenumfang 64 des hohlzylindrischen Grundkörpers 59 in Umfangsrichtung des weiteren Übertragungselementes 48 mit gleichem Abstand voneinander angeordnete, zu den Zahnelementen 55a komplementär ausgebildete, verdrallte Längsnuten 65 vertieft angeordnet. Die radial nach außen in Richtung zur Förderrolle 10 gerichteten und umfangsmäßig durch die Zahnelementen 55b begrenzten Längsnuten 65 weisen, wie aus den Fig. 6 und 7 ersichtlich, geneigt aufeinander zulaufende und geneigt zur Längsmittelachse 56 der Rollenachse 20 verlaufende Keilflanken 66 auf. Die Keilflanken 66 der Längsnuten 65 entsprechen den Keilflanken 58 der Zahnelementen 55b. Sind die Zahnelemente 55a ausgebildet, wie in der Fig. 8 in strichpunktierten Linien eingetragen, sind die Keilflanken 66 parallel zueinander und geneigt zur Längsmittelachse 56 der Rollenachse 20 verlaufend ausgebildet. Dies ist jedoch nicht weiters dargestellt. Die Keilflanken 58, 66 schließen mit der Längsmittelachse 56, 57 der Rollenachse 20 bzw. dem Übertragungselement 42, 48 einen Winkel 67 größer 0°, insbesondere zwischen 5° und 50°, beispielsweise 10°, 20°, 30° ein.

Das erste Übertragungselement 42 ist an der dem weiteren Übertragungselement 48 zugewandten Stirnseite 54 mit einer sich über einen Teil einer Länge 68 erstreckenden, kreiszylindrischen Ausnehmung 69 versehen, und ist zwischen dem ersten Übertragungselement 42 und dem weiteren Übertragungselement 48 in der Ausnehmung 69 eingesetzt, das zumindest eine Federelement 36, insbesondere eine Druckfeder, ausgerichtet in Richtung der Rollenachse 20. Natürlich ist es auch möglich, mehrere Federelemente 36 mit unterschiedlichen Federkonstanten in Richtung der Rollenachse 20 hintereinander anzuordnen.

Aus Platzgründen kann der erste Kupplungsteil 14 auch an seiner der Antriebsrolle 9 zugekehrten Stirnseite 70 eine koaxial zur Rollenachse 20 ausgebildete Aussparung 71, wie in strichlierten Linien in der Fig. 8 eingetragen, für die Aufnahme der Stützscheibe 39 aufweisen.

Eine bevorzugte Ausführungsvariante stellt auch die Anordnung einer Bremseinrichtung 72 zwischen dem mit dem verschiebbaren erste Kupplungsteil 14 bewegungsfest verbundenen, ersten Übertragungselement 42 und der Rollenachse 20 dar. Das erste Übertragungselement 42 bildet im Bereich der Ausnehmung 69 einen koaxial zur Rollenachse 20 umlaufenden Bremsfortsatz 73 aus, der mit einem auf der Rollenachse 20 festsitzenden, koaxial zur Rollenachse 20 umlaufenden Bremsklotz 74 in Eingriff bringbar ist, wobei der Bremsfortsatz 73 und der Bremsklotz 74 jeweils mit konischen Bremsflächen 75 versehen sind. Eine Bremsung der antreibbaren Förderrolle 10 kann nunmehr derart erfolgen, dass wenn sich der erste Kupplungsteil 14 in seiner ausgerückten Schaltstellung befindet, der Bremsfortsatz 73 mit seiner Bremsfläche 75 gegen die Bremsfläche 75 des Bremsklotzes 74 mit der Schaltkraft der Verstellvorrichtung 13 angepreßt wird und über die Stellvorrichtung 47, insbesondere die über die Außen- und Innenverzahnung miteinander in Eingriff befindlichen Übertragungselemente 42, 48 die Förderrolle 10 abgebremst wird. Die Schaltstellung, wo sich der erste Kupplungsteil 14 in seiner eingerückten Schaltstellung befindet und die Bremseinrichtung 72 nicht betätigt ist, ist aus der Fig. 3 ersichtlich und die Schaltstellung, wo sich der erste Kupplungsteil 14 in seiner ausgerückten Schaltstellung befindet und die Bremseinrichtung 72 betätigt ist, ist aus der Fig. 5 ersichtlich.

Zweckmäßig kann der Bremsfortsatz 73 gleichzeitig als Führung in radialer Richtung für das zumindest eine Federelement 36 eingesetzt werden. Der Bremsklotz 72 kann mit der Rollenachse 20 einstückig hergestellt oder als eigener Bauteil auf dieser z.B. über eine Schrumpf- oder Klebe- oder Schweißverbindung etc. befestigt werden.

Der erste Kupplungsteil 14 und das erste Übertragungselement 42 sowie die Bremseinrichtung 72 können einstückig aus Kunststoff, insbesondere Thermoplast, Duroplast, z.B. glasfaserverstärktes Polyamid mit einem Glasgehalt von bevorzugt 25%, Polycarbonat, z.B. im Spritzgußverfahren, Faserspritzverfahren, Extrudierverfahren hergestellt werden. Eine andere Ausführung besteht darin, dass das erste Übertragungselement 42 aus Stahl und der erste Kupplungsteil 14 durch einen im Bereich der der Antriebsrolle 9 zugekehrten Stirnseite 53 aufgeklebten Reibbelag mit konischer Kupplungsfläche 43 gebildet ist. Das weitere Übertragungselement 48 ist im gezeigten Ausführungsbeispiel ebenfalls aus Kunststoff, insbesondere Thermoplast, z.B. glasfaserverstärktes Polyamid mit einem Glasgehalt von bevorzugt 25%, Polycarbonat etc., gebildet.

In den gemeinsam beschriebenen Fig. 6 und 7 wird das Funktionsprinzip der zwischen der Kupplungseinrichtung 12, insbesondere dem ersten Kupplungsteil 14 und der Förderrolle 10 angeordneten, lastabhängigen, selbstnachstellenden Stellvorrichtung 47 erläutert. Der besseren Übersichtlichkeit wegen, wurde die Antriebsrolle 9 und das weitere Übertragungselement 48 sowie die zumindest antreibbare Förderrolle 10 nur schematisch angedeutet.

Mit der erfindungsgemäßen Stellvorrichtung 47 ist es nunmehr möglich, Stückgüter 18 am Staurollenförderer 1, wie diese in der Fig. 1 eingetragen sind, mit unterschiedlichem Gewicht, z.B. 0,5 kg, 5 kg, 10 kg, 30 kg, 50 kg, 80 kg usw. zu transportieren. In der eingekuppelten bzw. eingerückten Schaltstellung der Kupplungseinrichtung 12 wird der erste Kupplungsteil 14 während des Transportes des Stückgutes 18 mit einem Mindestgewicht von z.B. 0,5 kg mit einer auf das Mindestgewicht des Stückgutes 18 dimensionierten Federkraft - gemäß Pfeil 76 - und einer durch die Rotation der antreibbaren Förderrolle 10 in Rotationsrichtung - gemäß Pfeil 77 - ausgelösten Kraftkomponente - gemäß Pfeil 78 - an den Keilflanken 58, 66, mit einer auf das Gewicht des Stückgutes 18 eingestellten Andruckkraft gegen den ersten Kupplungsteil 15 der Antriebsrolle 9 angepreßt. Die Schaltkraft - gemäß Pfeil 79 - entspricht in diesem Fall ihrem Minimum. Die Federkraft und Kraftkomponente - gemäß den Pfeilen 76, 78 - verlaufen parallel zueinander und parallel zur Längsmittelachse 56.

Übersteigt währenddessen das Gewicht des in Eingriff mit der Förderrolle 10 verbrachten, antransportierten Stückgutes 18 das Mindestgewicht, wird an den Keilflanken 58 der Verzahnung 49 eine zur Federkraft und Kraftkomponente zusätzliche Axialkraft - gemäß Pfeil 80 - eingestellt, mit der der erste Kupplungsteil 14 während des Transportes des Stückgutes 18 auf dieser Förderrolle 10 gegen den weiteren Kupplungsteil 15 angepreßt wird.

Die sich durch die Differenz zwischen dem Mindestgewicht und Mehrgewicht einstellende Axialkraft - gemäß Pfeil 80 - an den Keilflanken 58 der Verzahnung 49 bzw. Außen- und Innenverzahnung der Übertragungselemente 42, 48 ist direkt proportional zur Andruckkraft zwischen den beiden Kupplungsteilen 14, 15.

Die Axialkraft - gemäß Pfeil 80 - ist funktional abhängig vom Gewicht des zu transportierendes Stückgutes 18. Je höher das Gewicht des Stückgutes 18, desto größer wird die Axialkraft - gemäß Pfeil 80 - und somit der Anpressdruck zwischen den beiden Kupplungsteilen 14, 15. Die entgegen der Axialkraft - gemäß Pfeil 80 - wirkende Schaltkraft - gemäß Pfeil 79 - muss für das Auskuppeln der Kupplungseinrichtung 12 nur kurzzeitig aufgebracht werden, denn sobald die Keilflanken 58 außer Eingriff sind, ist die Axialkraft - gemäß Pfeil 80 - aufgehoben.

Dadurch ist es nunmehr in überraschender Weise möglich, das innerhalb eines vorbestimmbaren Gewichtsbereiches zwischen dem Mindestgewicht und dem Maximalgewicht der zu transportierenden Stückgüter 18, ein Andruckkraft zwischen den beiden Kupplungsteilen 14, 15 selbsttätig eingestellt wird, sodass jederzeit eine schlupffreie Drehmomentenübertragung zwischen der Antriebsrolle 9 und der Förderrolle 10 möglich ist.

Es versteht sich natürlich, dass durch experimentelle Ermittlung von Reibpaarungen, der Reibungskoeffizient der über die Verzahnung 49 miteinander in Eingriff befindlichen und gegeneinander nach der Art einer Schraubenlinie verstellbaren Übertragungselemente 42, 48 optimiert werden kann.

Wie in der Fig. 6 weiters eingetragen, entspricht eine Überdeckungslänge 81, der nach der Art einer Schraubenlinie ineinandergeführten, relativ zueinander verstellbaren Übertragungselemente 42, 48 zumindest einem doppelten, bevorzugt einem mehrfachen eines axialen Verstellweges des von einer mit dem weiteren Kupplungsteil 15 in Antriebsverbindung stehenden eingerückten Schaltstellung in eine ausgerückte Schaltstellung verstellbaren ersten Kupplungsteiles 14.

Fig. 6 zeigt die ausgerückte Schaltstellung der Kupplungseinrichtung 12. Besonders vorteilhaft wirken sich auch die geneigt zur Längsmittelachse 56 verlaufenden Keilflanken 58, 66 aus, da während der Verschiebung des ersten Kupplungsteiles 14 in Richtung der sich drehenden Förderrolle 10 ein Bremskraft - gemäß Pfeil 82 - erzeugt wird und die Förderrolle 10 bereits noch vor dem gegenseitigen Eingreifen des Bremsfortsatzes 73 und Bremsklotzes 74 zumindest geringfügig abgebremst werden kann.

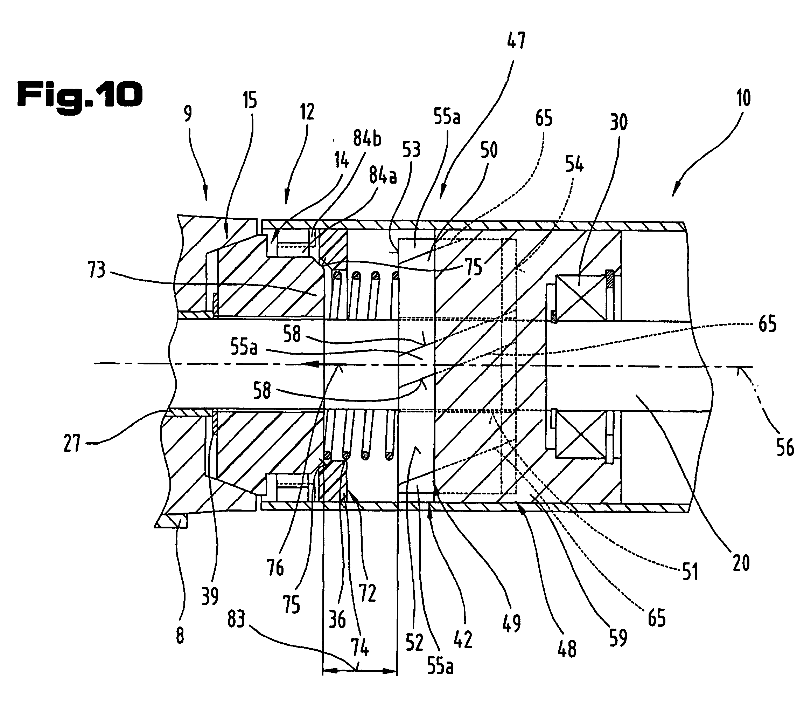

In der Fig. 10 ist eine andere Ausführungsvariante der Stellvorrichtung 47 gezeigt, bestehend aus den über die Verzahnung 49 miteinander in Eingriff befindlichen und in zur Rollenachse 20 axialer Richtung und Umfangsrichtung gegeneinander verstellbaren, mechanischen Übertragungselementen 42, 48. Das erste Übertragungselement 42 ist durch einen zylindrischen Grundkörper 50 mit der koaxial zur Rollenachse 20 verlaufenden Durchgangsöffnung 51 gebildet und von den zwei Stirnseiten 53, 54 begrenzt. Am Außenumfang 52 ist der Grundkörper 50 mit zumindest zwei, bevorzugt vier in Umfangsrichtung mit gleichem Abstand voneinander angeordneten Zahnelementen 55a versehen, die in den im Innenumfang des weiteren Übertragungselementes 48 vertieft angeordneten und umfangsmäßig begrenzten Längsnuten 65 geführt sind. Das weitere Übertragungselement 48 ist napfartig ausgebildet und wurde bereits oben ausführlich beschrieben. Zwischen dem getrennt vom verschiebbaren, ersten Kupplungsteil 14 angeordneten ersten Übertragungselement 42 und dem ersten Kupplungsteil 14 ist das zumindest eine Federelement 36, insbesondere die Druckfeder, zentrisch zur Rollenachse 20 angeordnet. Ist ein Stückgut 18 mit einem das Mindestgewicht übersteigenden Gewicht zu transportieren, wird ein zwischen dem Kupplungsteil 14 und dem ersten Übertragungselement 42 in Richtung der Rollenachse 20 bemessener Abstand 83, durch den sich nach der Art einer Schraubenlinie in Richtung auf den ersten Kupplungsteil 14 zubewegenden ersten Übertragungselementes 42 verkleinert und mit der Verkleinerung dieses Abstandes 83 die Federkraft gemäß - Pfeil 76 - und der Anpressdruck des ersten Kupplungsteiles 14 über die Federkraft hinweg gegen den weiteren Kupplungsteil 15 vergrößert. Wie in dieser Figur weiters eingetragen, ist der auf der Rollenachse 20 verschiebbare erste Kupplungsteil 14 mit einer parallel zur Längsmittelachse 56 bzw. Rollenachse 20 verlaufenden Außenverzahnung 84a und die Förderrolle 10 oder eine mit dieser bewegungsfest verbundene Buchse mit einer parallel zur Längsmittelachse 56 bzw. Rollenachse 20 verlaufenden, komplementären Innenverzahnung 84b versehen, die miteinander im Eingriff stehen und in der eingerückten Schaltstellung des ersten Kupplungsteiles 14 das Drehmoment von der Antriebsrolle 9 über den ersten Kupplungsteil 14 und der Außen- und Innenverzahnung 84 a, 84 b auf die Förderrolle 10 übertragen wird. Der Kupplungsteil 14 ist daher mittels der Außen- und Innenverzahnung 84 a, 84 b drehfest mit der Förderrolle 10 und gegenüber diese verschiebbar verbunden.

Das Wirkungsprinzip des Transportes von Stückgütern 18 mit unterschiedlichem Gewicht wurde bereits oben ausführlich erläutert und kann sinngemäß auf diese Fig. übertragen werden.

Wie schematisch eingetragen, kann zwischen der Förderrolle 10 und dem verschiebbaren ersten Kupplungsteil 14 die zumindest eine Bremseinrichtung 72 angeordnet werden. Der Bremsfortsatz 73 ist mit dem ersten Kupplungsteil 14 an einer dem Übertragungselement 42 zugekehrten Stirnseite und der Bremsklotz 74 mit der Förderrolle 10 an ihrer inneren Mantelfläche fest verbunden und sind die komplementär ausgebildeten Bremsflächen 75 des Bremsfortsatzes 73 und des Bremsklotzes 74 in der ausgerückten Schaltstellung der Kupplungseinrichtung 12 miteinander in Reibeingriff. Dies ist nicht weiters dargestellt.

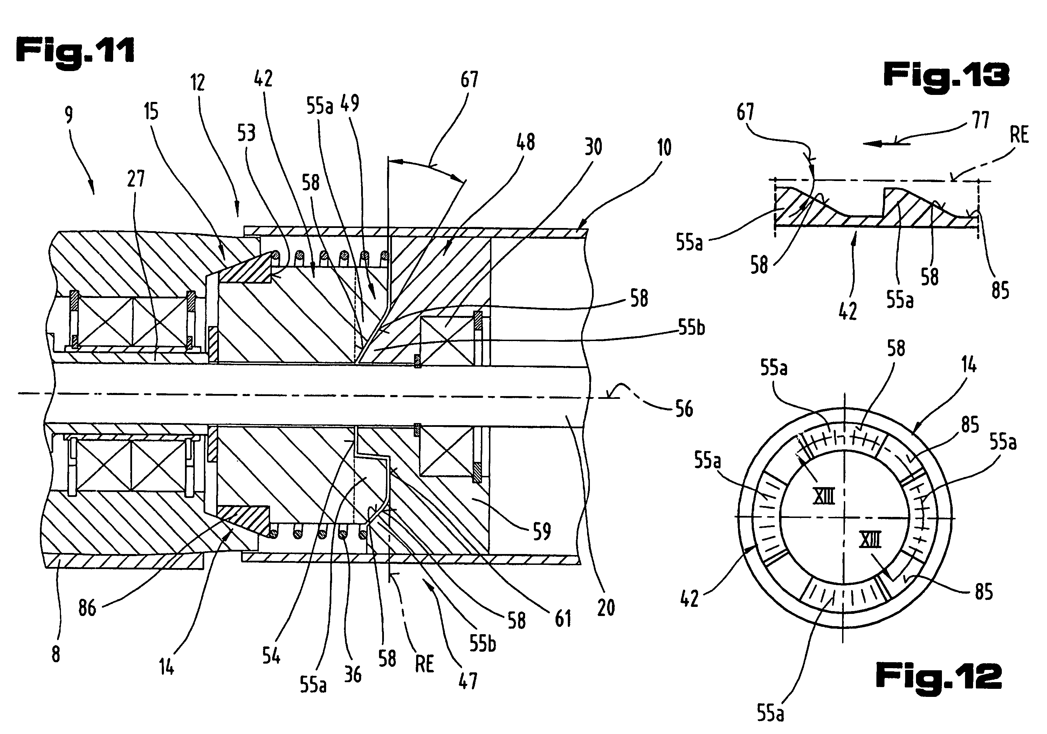

In den gemeinsam beschriebenen Fig. 11 bis 13 ist eine weitere Ausführungsvariante der Stellvorrichtung 47 in unterschiedlichen Ansichten und stark vereinfacht dargestellt. Die miteinander in Eingriff befindlichen Übertragungselemente 42, 48 bilden an ihren einander zugewandten Stirnseiten 54, 61 jeweils wenigstens zwei, bevorzugt vier in Umfangsrichtung mit gleichem Abstand voneinander angeordnete, gegensinnig axial aufeinander zugerichtete Zahnelemente 55a, 55b aus, die ausgehend von einem Anschlagsteg mit parallel zu einer Radialebene - RE - verlaufenden Anschlagflächen 85 in Rotationsrichtung - gemäß Pfeil 77 - ansteigend verlaufende Keilflanken 58 aufweisen. Die ansteigende Keilflanke 58 schließt mit der Radialebene - RE - den Winkel 67 größer 0°, insbesondere zwischen 5° und 50°, beispielsweise 30° ein. Zwischen dem weiteren Übertragungselement 48 und dem ersten Kupplungsteil 14 ist dass das erste Übertragungselement 42 umfassende zumindest eine Federelement 36 koaxial zur Rollenachse 20 angeordnet. Gemäß diesem Ausführungsbeispiel ist die Verzahnung 49 jeweils an den einander zugewandten Stirnseiten 54, 61 der Übertragungselemente 42, 48 einstückig angeformt. Das erste Übertragungselement 42 ist im vorliegenden Ausführungsbeispiel aus Stahl ausgebildet und ist auf einem im Bereich der Antriebsrolle 9 zugekehrten Stirnseite des Übertragungselementes 42 ein Absatz für den auf diesem aufgeklebten Reibbelag 86 ausgebildet. Das weitere Übertragungselement 48 ist bevorzugt aus Kunststoff.

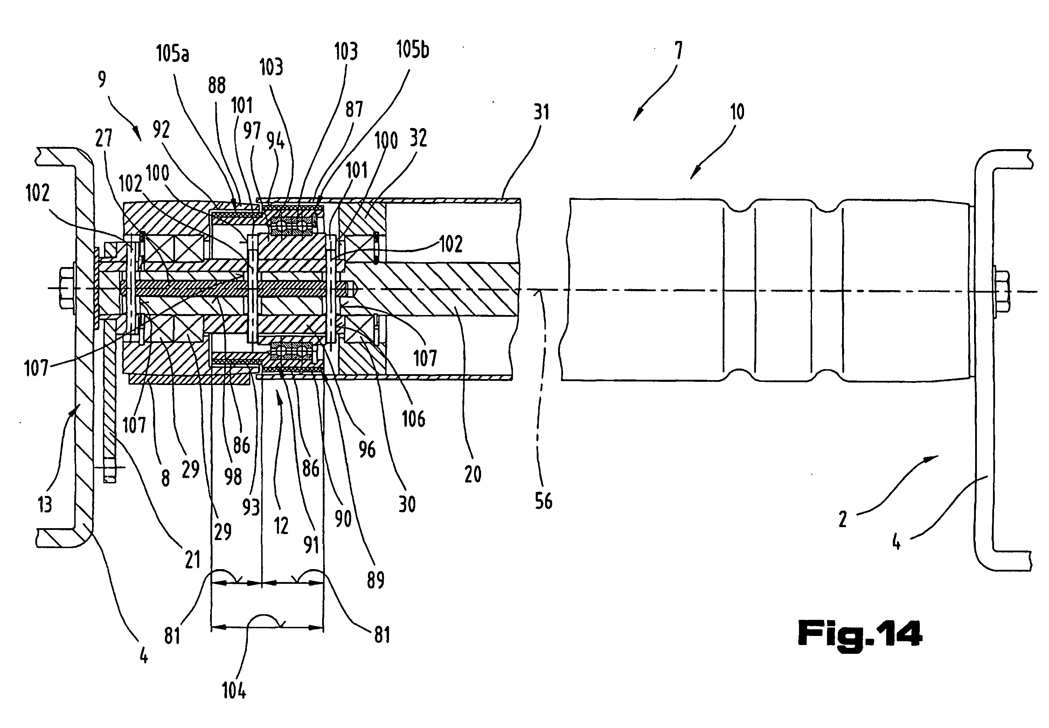

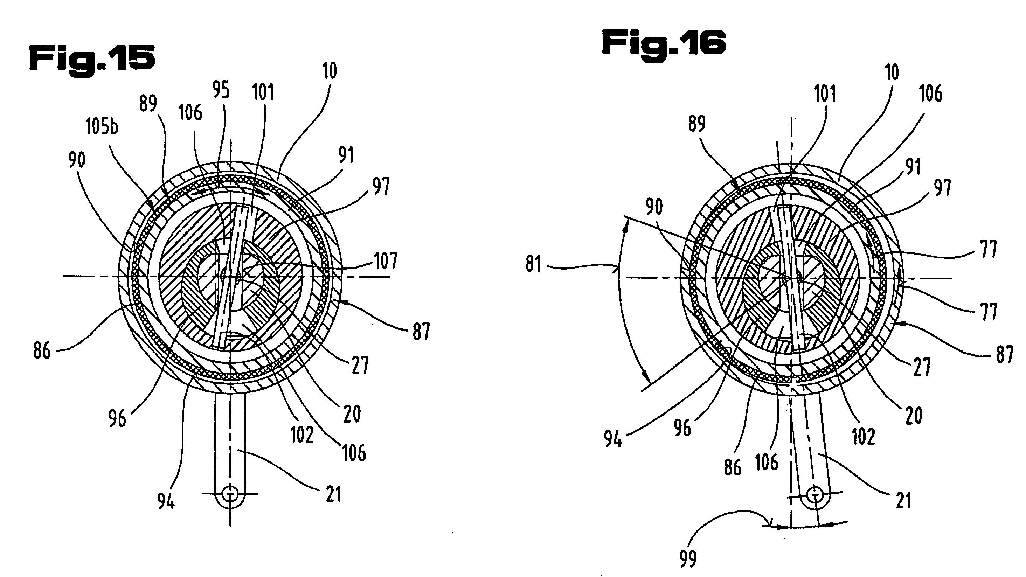

In den gemeinsam beschriebenen Fig. 14 bis 16 ist eine weitere Ausführungsvariante der erfindungsgemäßen Rollenanordnung 7 mit einer im Tragrahmen 2 des Staurollenförderers angeordneten feststehenden Rollenachse 20, auf der die Antriebsrolle 9 und die antreib- und gegebenenfalls bremsbare Förderrolle 10 drehbar gelagert ist, teilweise geschnitten und stark vereinfacht dargestellt. Zwischen der Antriebsrolle 9 und der antreib- und/oder bremsbaren Förderrolle 10 ist zumindest eine mechanische Kupplungseinrichtung 12 mit über die Verstellvorrichtung 13, insbesondere den Schalthebel 21 relativ zueinander verstellbaren Kupplungsteilen 87, 88, 89 angeordnet. Der erste Kupplungsteil 87 ist durch einen Teilabschnitt der antreib- und gegebenenfalls bremsbaren, hohlzylindrischen Förderrolle 10 mit einer zur Längsmittelachse 56 der Rollenachse 20 konzentrischen Kupplungsfläche 90, der zweite Kupplungsteil 88 durch einen Teilabschnitt der Antriebsrolle 9 und der zwischen dem ersten und dem zweiten Kupplungsteil 87, 88 angeordnete dritte Kupplungsteil 89 durch eine hohlzylindrische Übertriebsrolle 91 gebildet. Die Übertriebsrolle 91 ist innerhalb der Antriebs- und Förderrolle 9, 10 angeordnet. Der zweite Kupplungsteil 88 ist durch eine koaxial zur Rollenachse 20 ausgebildeten Ausnehmung 92 mit einer konzentrisch um die Längsmittelachse 56 der Rollenachse 20 umlaufenden Kupplungsfläche 93 versehen. Ein Teilabschnitt einer inneren Mantelfläche der Förderrolle 10 bildet die Kupplungsfläche 90 und eine äußere Mantelfläche der Übertriebsrolle 91 bildet eine mit der Kupplungsflächen 90, 93 der Förderrolle 10 und Antriebsrolle 9 in Eingriff bringbare Kupplungsflächen 94 aus. Die Übertriebsrolle 91 ist über den Schalthebel 21 gegenüber der Förderrolle 10 und Rollenachse 20 von einer ausgerückten Schaltstellung, wie in der Fig. 15 dargestellt, in eine mit dem ersten Kupplungsteil 87 und dem zweiten Kupplungsteil 88 mit den Kupplungsflächen 90, 93 in Antriebsverbindung stehende, eingerückte Schaltstellung, wie in der Fig. 16 dargestellt, verschwenkbar - gemäß eingetragenen Doppelpfeil 95 - ausgebildet. Die hohlzylindrische, walzenartige Übertriebsrolle 91 ist auf einer, gegenüber einer auf der Rollenachse 20 gehaltenen Exzenterbuchse 96 in Umfangsrichtung bzw. in der Radialebene verschwenkbaren Schwenkbuchse 97 verdrehbar gelagert. Die Schwenkbuchse 97 ist mit dem in einer Bohrung 98 in der Rollenachse 20 verdrehbar gelagerten und eine Schaltkraft der Verstellvorrichtung 13 übertragenden, stabförmigen Schaltelement 27 verbunden. Natürlich besteht auch die Möglichkeit, dass das in der Bohrung 98 um einen Schwenkwinkel 99 zwischen 10° und 30°, insbesondere zwischen 15° und 25°, beispielsweise 17°, verdrehbare Schaltelement 27 an einen elektrisch oder pneumatisch oder hydraulischen Schwenkantrieb anzukoppeln. In diesem Fall sind die Sensoren 19 des Staurollenförderers 1 durch berührungslos das Stückgut erfassende Sensoren 19, z.B. photoelektrische Zellen gebildet und erhalten die jeder Rollenanordnung 7 zugeordneten Schwenkantriebe der Förderzonen 5a; 5b; 5c; 5d ein elektrisches Stellsignal.

Die Schwenkbuchse 97 ist an ihren einander gegenüberliegenden Stirnflächen 100 mit in diesen vertieft angeordneten Mitnahmeschlitzen 101, in denen mit dem bolzenförmigen Schaltelement 27 bewegungsfest verbundene Betätigungselemente, insbesondere Zylinderstifte 102 verdrehgesichert gegenüber der Schwenkbuchse 97 positioniert gehalten sind und über die eine Verschwenkbewegung vom Schalthebel 21 über das Schaltelement 27 und die Schwenkbuchse 97 auf die auf dieser drehbar gelagerte Übertriebsrolle 91 übertragen wird. Der Schalthebel 21 der Verstellvorrichtung 13 ist ebenfalls mit dem Schaltelement 27 über einen Zylinderstift 102 bewegungsfest verbunden.

Die über Lager 103, insbesondere Wälzlager, auf der Schwenkbuchse 97 abgestützte, drehbare Übertriebsrolle 91 ist in Richtung ihrer Länge 104 in zwei Kupplungsteilabschnitte 105a, 105b unterteilt, wobei ein erster Kupplungsteilabschnitt 105a in der eingerückten Schaltstellung mit seiner Kupplungsfläche 94 mit einem Teilabschnitt des Umfanges der Kupplungsfläche 93 der Antriebsrolle 9 und der weitere Kupplungsteilabschnitt 105b mit seiner Kupplungsfläche 94 mit einem Teilabschnitt des Umfanges der Kupplungsfläche 90 der antreib- und gegebenenfalls bremsbaren Förderrolle 10 in Reibeingriff steht. Auf diese einfache Art und Weise kann in der eingerückten Schaltstellung der Übertriebsrolle 91 das Drehmoment von der Antriebrollen 9 über die Übertriebsrolle 91 auf die Förderrolle 10 übertragen werden.

Wie den Fig. entnommen werden kann, ist die Exzenterbuchse 96 an ihren in Richtung der Rollenachse 20 abgewandten Stirnseiten mit vertieft angeordneten, diametral gegenüberliegenden, radial gerichteten und umfangsmäßig begrenzten, schlitzartigen Aufnahmebereichen 106 und die Rollenachse 20 mit von den Zylinderstiften 102 durchsetzten zylindrischen Öffnungen 107 versehen. Der Reibbelag 86 an einer äußeren und/oder inneren Mantelfläche der Übertriebsrolle 91 bzw. Antriebs- und Förderrolle 9, 10 sorgt für eine schlupffreie Übertragung des Drehmomentes von der Antriebsrollen 9 auf die Förderrolle 10.

Eine vorteilhafte Ausbildung besteht darin, dass die Förderrolle 10 im Bereich der die Kupplungsfläche 90 ausbildenden Teilabschnitt und/oder die Übertriebsrolle 91 im Bereich der die Kupplungsfläche 94 ausbildenden Kupplungsteilabschnitte 105a, 105b zumindest eine in radialer Richtung zumindest geringfügig elastisch nachgiebige Schichte aus Kunststoff aufweist. Diese Schichte ist durch den Reibbelag 86 und beispielsweise durch Polyurethan mit einer Shorehärte von 80 gebildet. In der eingerückten Schaltstellung ist die Kupplungsfläche 94 der beiden Kupplungsteilabschnitte 105a, 105b gegen die Teilabschnitte des Umfanges der Kupplungsflächen 90, 93 der Förderrolle 10 und der Antriebsrolle 9 mit einer vorbestimmten Andruckkraft flächig angepreßt und bildet eine streifenförmige, im Querschnitt kreisbogenartige und sich in Richtung der Rollenachse 20 erstreckende Eingriffszone zwischen der Kupplungsfläche 94 der Übertriebsrolle 91 und den Kupplungsflächen 90, 93 der Antriebsrolle 9 und der Förderrolle 10 aus, sodass hohe Antriebsmomente von der Antriebsrolle 6 über die Übertriebsrolle 91 auf die Förderrolle 10 schlupffrei übertragen werden können.

Die Überdeckungslänge 81 der Kupplungsfläche 94 der Kupplungsteilabschnitte 105a, 105b und der Kupplungsfläche 90, 93 der Förder- und Antriebsrolle 9, 10 beträgt in der senkrecht zur Längsmittelachse 56 verlaufenden Radialebene zwischen 10° und 45°, insbesondere zwischen 20° und 30°, beispielsweise 25°, und in zur Rollenachse 20 paralleler Richtung jeweils etwa die Hälfte der Länge 104 der Übertriebsrolle 91. Natürlich kann je nach Höhe des zu übertragenden Drehmomentes von der Antriebsrolle 9 auf die Förderrolle 10 die Länge 104 und/oder die Elastizität des Materials des Belages 86 und/oder die Andruckkraft der Übertriebsrolle 91 gegen den ersten und zweiten Kupplungsteil 87, 88 variieren. Die Länge 104 kann zwischen 10 mm und 120 mm, insbesondere zwischen 20 mm und 60 mm, beispielsweise 50 mm, betragen. Ein Außendurchmesser des dritten Kupplungsteiles 89 bzw. der Kupplungsfläche 94 der Kupplungsteilabschnitte 105a, 105b ist zumindest geringfügig kleiner bemessen als ein Innendurchmesser des ersten und zweiten Kupplungsteiles 87, 88 bzw. der Kupplungsflächen 90, 93.

Wie nicht weiters dargestellt, kann mit dem gegenüber der Rollenachse 20 verschwenkbaren Schaltelement 27 ein scheibenartiger Bremsfortsatz 73 mit exzentrisch zur Längsmittelachse 56 verlaufender Bremsfläche 75 bewegungsfest verbunden. Die Förderrolle 10 bildet mit ihrer inneren Mantelfläche zusätzlich zur Kupplungsfläche 90 die mit der ersten Bremsfläche 75 des Bremsfortsatzes 73 in Eingriff bringbare weitere Bremsfläche 75 aus. Wird die Übertriebsrolle 91 von der eingerückten Schaltstellung in die ausgerückte Schaltstellung verschwenkt, wird gleichzeitig der Bremsfortsatz 73 verschwenkt und die erste Bremsfläche 75 des Bremsfortsatzes 73 gegen die weitere Bremsfläche 75 der Förderrolle 10 mit einer vorbestimmbaren Bremskraft angepreßt bzw. kommen die Bremsflächen 75 miteinander in Eingriff und die Förderrolle 10 wird gebremst. In der eingerückten Schaltstellung der Übertriebsrolle 91 ist der Bremsfortsatz 73 von der weiteren Bremsfläche 75 an der Förderrolle 10 abgehoben. Die Bremskraft kann unmittelbar durch den frei bestimmbaren Schwenkwinkel 99 des Schalthebels 21 eingestellt werden. Der etwa scheibenartige Bremsfortsatz 73 ist aus einem verschleißfesten und eine hohe Reibungszahl aufweisenden Kunststoff, z.B. aus einem Thermoplast, Duroplast, gebildet.

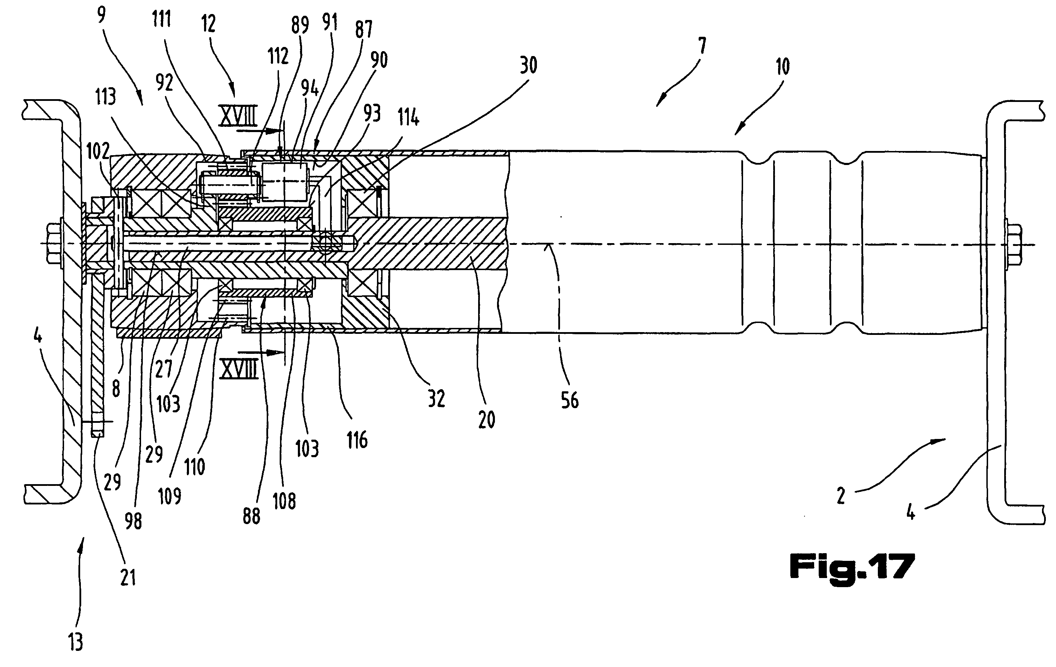

In den gemeinsam beschriebenen Fig. 17 bis 19 ist eine weitere Ausführungsvariante der erfindungsgemäßen Rollenanordnung 7 für einen in dieser Fig. nicht dargestellten Staurollenförderer 1, teilweise geschnitten und stark vereinfacht dargestellt. Die Rollenanordnung 7 weist die in den Seitenteilen 4 des Tragrahmens 2 feststehende Rollenachse 20 mit der auf ihr gelagerten Antriebsrolle 9 und die antreibbare Förderrolle 10 auf. Zwischen der Antriebsrolle 9 und der Förderrolle 10 ist die über die Verstellvorrichtung 13, insbesondere den Schalthebel 21 relativ zueinander verstellbare Kupplungsteile 87, 88, 89 aufweisende Kupplungseinrichtung 12 angeordnet. Der erste Kupplungsteil 87 ist durch einen Teilabschnitt der Förderrolle 10, der zweite Kupplungsteil 88 durch eine mit der Antriebsrolle 9 antriebsverbundene, hohlzylindrische Treibrolle 108 und der zwischen dem ersten und zweiten Kupplungsteil 87, 88 angeordnete, dritte Kupplungsteil 89 durch eine kreiszylindrische, walzenartige Übertriebsrolle 91 gebildet. Die Treibrolle 108, bei der in diesen Fig. dargestellten Ausführungsform, ist in einem der Antriebsrolle 9 zugewandten Endbereich mit einer Außenverzahnung 109 und die Antriebsrolle 9 im Bereich ihrer Ausnehmung 92 mit einer koaxial zur Rollenachse 20 angeordnete Innenverzahnung 110 ausgestattet. Zwischen der Außen- und Innenverzahnung 109, 110 der Treibrolle 108 und der Antriebsrolle 9 ist ein Zwischenrad 111 bzw. Zahnrad angeordnet. Das Zwischenrad 111 ist auf einer feststehenden Achse 112 drehbeweglich gelagert, die wiederum an einem ortsfesten Halteflansch 113 befestigt ist. Die Treibrolle 108 ist daher ständig angetrieben und rotiert auf der Rollenachse 20 mit einer vorbestimmten Drehzahl in Rotationsrichtung - gemäß Pfeil 77.

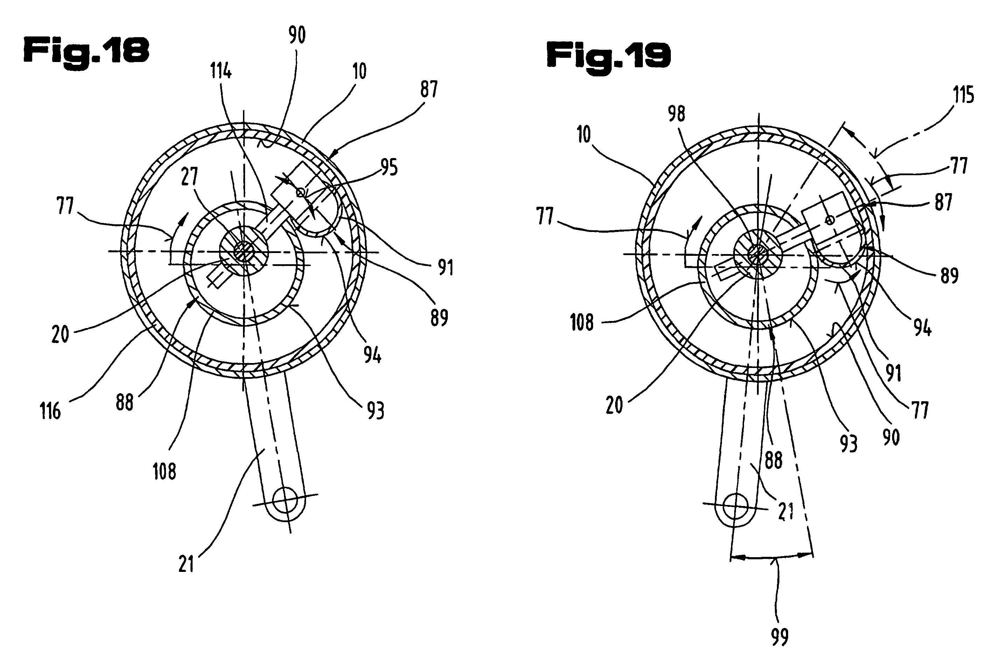

Die walzenartige Übertriebsrolle 91 ist an einem um die Rollenachse 20 verschwenkbaren Stellhebel 114 gelagert, der mit dem in der Bohrung 98 verdrehbar gelagerten und die Schaltkraft der Verstellvorrichtung 13, insbesondere des Schalthebels 21 übertragenden, stabförmigen Schaltelement 27 verbunden ist. Die von der ausgerückten Schaltstellung, gemäß Fig. 18, in die eingerückte Schaltstellung, gemäß Fig. 19, um die Längsmittelachse 56 verschwenkbare Übertriebsrolle 91 ist in der eingerückten Schaltstellung mit der exzentrisch zur Längsmittelachse 56 der Rollenachse 20 verlaufenden Kupplungsfläche 93 des zweiten Kupplungsteiles 88 und mit der konzentrisch um die Längsmittelachse 56 umlaufenden Kupplungsfläche 90 des ersten Kupplungsteiles 87 in Eingriff bzw. Antriebsverbindung und überträgt das Drehmoment von der Treibrolle 108 auf die Förderrolle 10.

Ein dem Schwenkwinkel 99 des Schalthebels 21 entsprechender Schwenkwinkel 115 der Übertriebsrolle 91 beträgt zwischen 10° und 30°, insbesondere zwischen 15° und 25°, beispielsweise 17°.

Die Treibrolle 108 ist über die Lager 103, insbesondere Wälzlager, auf der Rollenachse 20 drehbar gelagert.

Die Übertriebsrolle 91 ist aus Kunststoff, z.B. einem Duroplast, Thermoplast, gebildet. Der Förderrollenboden 32 ist napfartig ausgebildet und bildet mit seiner von einer Grundfläche vorragenden hohlzylinderartigen Wandung 116 die Kupplungsfläche 90 für die Übertriebsrolle 91 aus. Natürlich kann der erste Kupplungsteil 87 auch durch einen Teilabschnitt der inneren Mantelfläche der Förderrolle 10 die Kupplungsfläche 90 ausbilden. Der Förderrollenboden 32 kann aus Kunststoff oder Metall bestehen und ist mit der Förderrolle 10 bewegungsfest, z.B. über Kerbstifte, Spannstifte, Kleber verbunden.

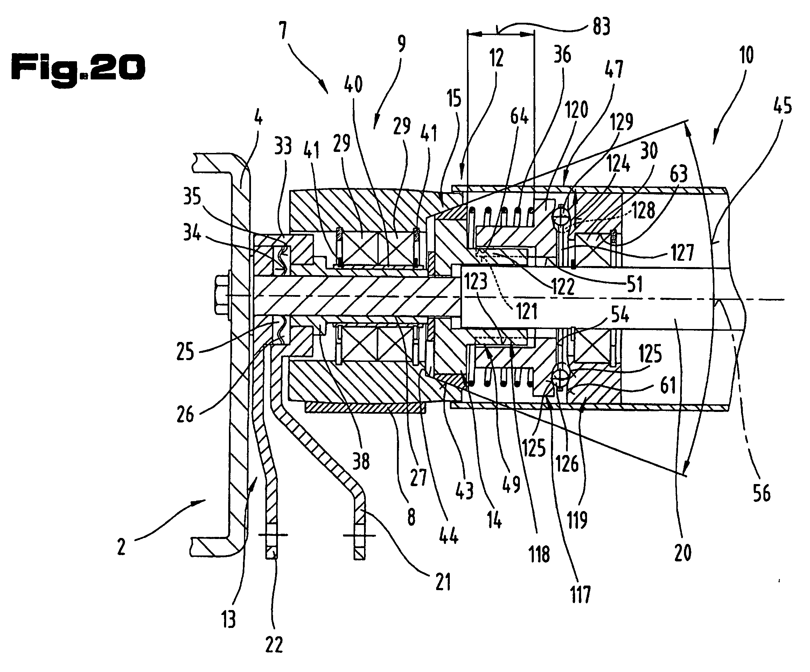

In der Fig. 20 ist eine weitere Ausführungsform der erfindungsgemäßen Rollenanordnung 7 teilweise geschnitten und in stark vereinfachter schematischer Darstellung gezeigt. Diese Rollenordnung 7 weist auf der im Tragrahmen 2 angeordneten, feststehenden Rollenachse 20 die drehbar gelagerte und angetriebene Antriebsrolle 9 und die zumindest antreibbare, über die Lager 30 auf der Rollenachse 20 drehbar gelagerte Förderrolle 10 auf. Zwischen der Antriebs- und Förderrolle 9, 10 ist die zumindest eine mechanische, insbesondere reibschlüssig wirkende Kupplungseinrichtung 12 angeordnet. Die Kupplungseinrichtung 12 besteht aus den über die Verstellvorrichtung 13, insbesondere die Schalthebel 21, 22 relativ zueinander verstellbaren Kupplungsteilen 14, 15. Der erste Kupplungsteil 14 ist auf der Rollenachse 20 von der eingerückten Schaltstellung in die ausgerückte Schaltstellung entgegen dem zumindest einen Federelement 36 axial verstellbar angeordnet.

Zwischen der Förderrolle 10 und dem ersten Kupplungsteil 14 ist die zumindest eine unter Einwirkung vom Gewicht des zu transportierenden Stückgutes 18 auf die Förderrolle 10, wie in der Fig. 1 dargestellt, eine Andruckkraft einstellende, mechanische Stellvorrichtung 47 angeordnet. Die Stellvorrichtung 47 weist zumindest zwei über die Verzahnung 49 miteinander in Eingriff befindliche und in zur Rollenachse 20 axialer Richtung gegeneinander verstellbare mechanische Übertragungselemente 117, 118 und ein feststehendes drittes Übertragungselemente 119 auf. Das rotationssymmetrische zweite Übertragungselement 117 bildet einen hohlzylindrischen Grundkörper und einen von diesem radial nach außen vorstehenden, umlaufenden Flansch 120 aus, in dem die zur Rollenachse 20 koaxiale Durchgangsöffnung 51 angeordnet ist.

Das zweite Übertragungselement 117 ist an seinem Innenumfang 64 mit einer parallel zur Rollenachse 20 verlaufenden Innenverzahnung 121 versehen und auf dem, einen Ringsteg 122 mit einer komplementär und parallel zur Rollenachse 20 verlaufenden Außenverzahnung 123 ausbildenden ersten Kupplungsteil 14 axial verschiebbar angeordnet ist. Der ersten Kupplungsteil 14, insbesondere der Ringsteg 122, bildet das erste Übertragungselement 118 aus. Das zumindest eine Federelement 36 ist zwischen dem ersten Kupplungsteil 14 und einem zweiten Übertragungselement 117 angeordnet. Ein drittes Übertragungselement 119 ist scheibenförmig ausgebildet und mit der zur Rollenachse 20 koaxialen Bohrung 63 für das Lager 30 der Förderrolle 10 versehen und bewegungsfest mit der Förderrolle 10 verbunden. Das zweite Übertragungselement 117 ist zwischen dem ersten und dritten Übertragungselement 118, 119 angeordnet. Das erste und zweite Übertragungselement 118, 117 sind zu dem dritten Übertragungselement 119 und zueinander relativ, insbesondere axial, verstellbar.

Die einander benachbarten Übertragungselemente 117, 119 sind an ihren einander zugewandten Stirnseiten 54, 61 mit in diesen vertieft angeordneten, radial umlaufenden und in Radialrichtung - gemäß Pfeil 124 - zueinander versetzten Kulissenbahnen 125 versehen, zwischen denen in der Radialrichtung - gemäß Pfeil 124 - kugelförmige Kulissensteine 126 angeordnet sind. Die Kulissenbahnen 125 weisen einen kreisbogenförmigen, jeweils den Stirnseiten 54, 61 zugewandt einen konvexen Verlauf auf.

Der erste Kupplungsteil 14 wird mit der auf das Mindestgewicht eines zu transportierenden Stückgutes 18 ausgelegten Federkraft entsprechenden Andruckkraft gegen den weiteren Kupplungsteil 15 gepresst.

In der eingerückten Schaltstellung des ersten Kupplungsteiles 14 wandern mit zunehmendem Gewicht des zu transportierenden Stückgutes 18, die in einem Käfig 127 gehaltenen Kulissensteine 126 in der Radialrichtung - gemäß Pfeil 124 - von einer Grundstellung 128, wie in strichlierten Linien eingetragen, bei der das zweite Übertragungselement 117 in zur Rollenachse 20 axialer Richtung unbetätigt ist, in eine Betriebsstellung 129, wie in vollen Linien eingetragen, bei der das zweite bzw. mittlere Übertragungselement 117 zum axial verschiebbaren ersten Kupplungsteil 14 hin bewegt und durch die Verkürzung des Abstandes 83 zwischen dem ersten Kupplungsteil 14 und dem zweiten Übertragungselement 117 die Andruckkraft derart eingestellt wird, dass ein schlupffreier Eingriff zwischen den beiden Kupplungsteilen 14, 15 erreicht wird. Durch die Verkürzung des Abstandes 83 steigt die Federkraft an und presst dadurch den Kupplungsteil 14 mit einer erhöhten Andruckkraft gegen den Kupplungsteil 15, sodass das Drehmoment zwischen den Kupplungsteilen 14, 15 schlupffrei übertragen wird.

In der Grundstellung 128 der Kulissensteine 126 wird der erste Kupplungsteil 14 ausschließlich mit der zur Federkraft proportionalen Andruckkraft gegen den weiteren Kupplungsteil 15 angepreßt.

Die Art und Weise der Funktion der Stellvorrichtung 47 wurde bereits oben erläutert und kann auf diese Ausführung übertragen werden.

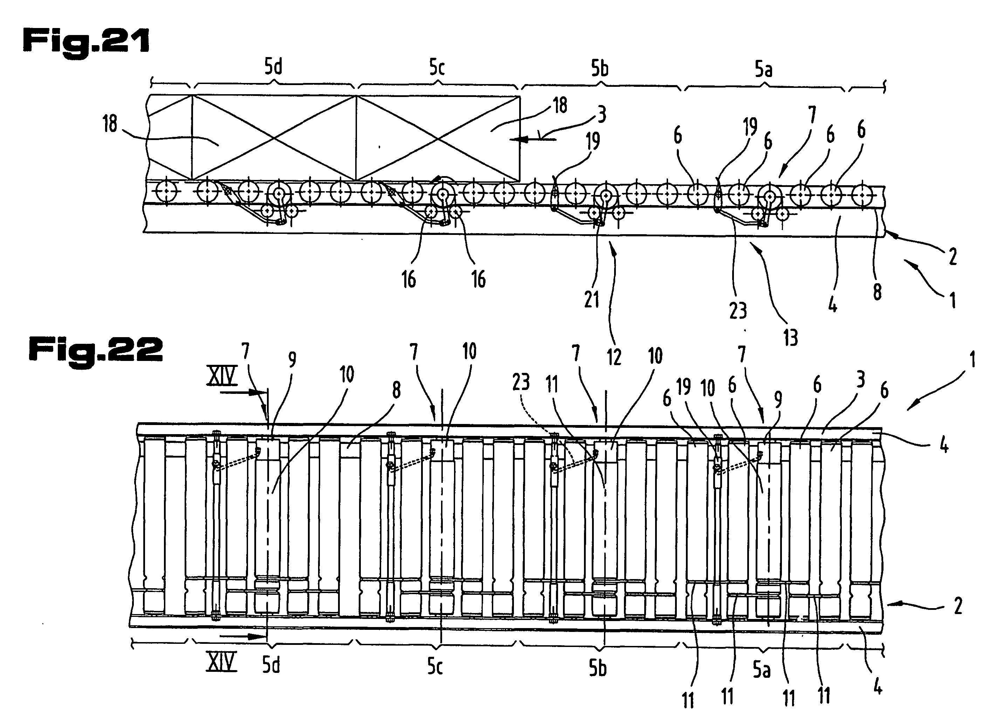

In den gemeinsam beschriebenen Fig. 21 und 22 ist der Staurollenförderer 1 für die in diesem in jeder Förderzone 5a, 5b, 5c, 5d eingesetzten Rollenanordnung 7 nach den Fig. 14 bis 19 in unterschiedlichen Ansichten gezeigt. Der Staurollenförderer 1 besteht aus dem Tragrahmen 2 mit den in Förderrichtung - gemäß Pfeil 3 - verlaufenden und den Staurollenförderer 1 seitlich begrenzenden Seitenteilen 4, die über mehrere in Förderrichtung - gemäß Pfeil 3 - gesehen voneinander beabstandet angeordnete, nicht dargestellte Querträger verbunden sind und somit auf Abstand gehalten werden. Der Staurollenförderer 1 ist in Förderrichtung gemäß - Pfeil 3 - in mehrere hintereinander ausgebildete Förderzonen 5a bis 5d unterteilt. Jede Förderzone 5a bis 5d weist die im Tragrahmen 2, insbesondere in den Seitenteilen 4 in Förderrichtung - gemäß Pfeil 3 - zueinander beabstandet angeordnete Vielzahl von unangetriebenen Rollen 6 und die zumindest eine Rollenanordnung 7 nach den Fig. 14 bis 19 auf.

Gemäß den Fig. 1 und 2 ist jeder Förderzone 5a bis 5d zumindest ein ein in Förderrichtung - gemäß Pfeil 3 - von der Förderzone 5a nach der Förderzone 5d transportierte Stückgut 18, z.B. ein Ladehilfsmittel, wie Karton, Palette, Kiste, etc. erfassender Sensor 19, insbesondere eine in den Bewegungsweg der Stückgüter 18 hineinragende Schaltklappe oder eine photoelektrische Zelle, z.B. Lichtschranke, zugeordnet.

Die Verstellvorrichtung 13 weist im vorliegenden Ausführungsbeispiel zwei auf einer Rollenachse 20 der Rollenanordnung 7 jeder Förderzone 5a bis 5d verschwenkbeweglich gelagerte Schalthebel 21, 22 und ein den Sensor 19 der betreffenden Förderzone 5a; 5b; 5c; 5d mit dem ersten Schalthebel 21 verbindendes erstes Schaltgestänge 23 sowie ein den zweiten Schalthebel 22 der betreffenden Förderzone 5a; 5b; 5c; 5d mit der in Förderrichtung - gemäß Pfeil 3 - vorgeordneten Förderzone 5d; 5c; 5b; 5a verbindendes weiteres Schaltgestänge 24 auf. Die Schaltgestänge 23, 24 sind mit den verschwenkbaren Schaltklappen und jeweils mit den Schalthebeln 21, 22 gelenkig verbunden. Durch die Verschaltung der Förderzonen 5a bis 5d miteinander, ist eine gezielte Ansteuerung z.B. eines Stauvorganges der Stückgüter 18 entlang des Staurollenförderers 1 möglich.

Ist, wie in der Fig. 1 eingetragen, die Förderzone 5d mit einem Stückgut 18 belegt, wird der Sensor 19 bzw. die Schaltklappe in dieser betreffenden Förderzone 5d durch das Stückgut 18 niedergedrückt und der mit der Schaltklappe der betreffenden Förderzone 5d über das Schaltgestänge 23 verbundene und auf der Rollenachse 20 verschwenkbare Schalthebel 21 betätigt und die in ihrer Grundstellung sich in einer eingerückten bzw. eingekuppelten Schaltstellung - gemäß Fig. 16; 19 - befindliche Kupplungseinrichtung 12 in die ausgerückten bzw. ausgekuppelten Schaltstellung - gemäß Fig. 15; 18 - verstellt. Dabei wird die angetriebene Förderrolle 10 von der Antriebsrolle 9 abgekoppelt und somit die Förderrolle 10 und die weiteren in dieser Förderzone 5d angeordneten Rollen 6 sowie das Stückgut 18 in dieser Förderzone 5d in Stillstand versetzt. Dieser Vorgang kann entlang des Staurollenförderers 1 beliebig fortgesetzt werden. Die Verstellvorrichtung 13 weist im vorliegenden Ausführungsbeispiel den auf der Rollenachse 20 der Rollenanordnung 7 jeder Förderzone 5a bis 5d verschwenkbeweglich gelagerten Schalthebel 21 und das mit dem Sensor 19 der betreffenden Förderzone 5a; 5b; 5c; 5d mit dem Schalthebel 21 verbundene erste Schaltgestänge 23 auf.

Abschließend sei noch erwähnt, dass das erste Übertragungselement 42; 117 und/oder das weitere Übertragungselement 48; 118 und/oder der erste Kupplungsteil 14 oder zumindest ein Teil derselben aus Metall und/oder Kunststoff z.B. Thermoplast, Duroplast, z.B. glasfaserverstärktes Polyamid mit einem Glasgehalt von bevorzugt 25%, Polycarbonat etc., gebildet sind.

Der Ordnung halber sei abschließend darauf hingewiesen, dass zum besseren Verständnis des Aufbaus der Bewegungseinheit und Vorrichtung diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1 bis 9; 10; 11, 12, 13; 14, 15, 16; 17, 18, 19; 20; 21, 22 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Staurollenförderer
- 2: Tragrahmen
- 3: Pfeil
- 4: Seitenteil
- 5a: Förderzone
- 5b: Förderzone
- 5c: Förderzone
- 5d: Förderzone

- 6: Rolle
- 7: Rollenanordnung
- 8: Antriebsorgan
- 9: Antriebsrolle
- 10: Förderrolle

- 11: Riemen
- 12: Kupplungseinrichtung
- 13: Verstellvorrichtung
- 14: Kupplungsteil
- 15: Kupplungsteil

- 16: Andrückrolle
- 18: Stückgut
- 19: Sensor
- 20: Rollenachse

- 21: Schalthebel
- 22: Schalthebel
- 23: Schaltgestänge
- 24: Schaltgestänge
- 25: Fächerscheibe

- 26: Fächerscheibe
- 27: Schaltelement
- 29: Lager
- 30: Lager

- 31: Förderrollenmantel
- 32: Förderrollenboden
- 33: Aufnahmekörper
- 34: Schaltnocke
- 35: Schaltnocke

- 36: Federelement
- 38: Bund
- 39: Stützscheibe
- 40: Gleitlagerbuchse

- 41: Sicherungsring
- 42: Übertragungselement
- 43: Kupplungsfläche
- 44: Kupplungsfläche
- 45: Öffnungswinkel

- 47: Stellvorrichtung
- 48: Übertragungselement
- 49: Verzahnung
- 50: Grundkörper

- 51: Durchgangsöffnung
- 52: Außenumfang
- 53: Stirnseite
- 54: Stirnseite
- 55a: Zahnelement
- 55b: Zahnelement

- 56: Längsmittelachse
- 57: Längsmittelachse
- 58: Keilflanke
- 59: Grundkörper
- 60: Stirnseite

- 61: Stirnseite
- 62: Boden
- 63: Bohrung
- 64: Innenumfang
- 65: Längsnut

- 66: Keilflanke
- 67: Winkel
- 68: Länge
- 69: Ausnehmung
- 70: Stirnseite

- 71: Aussparung
- 72: Bremseinrichtung
- 73: Bremsfortsatz
- 74: Bremsklotz
- 75: Bremsfläche

- 76: Federkraft
- 77: Rotationsrichtung
- 78: Kraftkomponente
- 79: Schaltkraft
- 80: Axialkraft

- 81: Überdeckungslänge
- 82: Bremskraft
- 83: Abstand
- 84a: Außenverzahnung
- 84b: Innenverzahnung
- 85: Anschlagfläche

- 86: Reibbelag
- 87: Kupplungsteil
- 88: Kupplungsteil
- 89: Kupplungsteil
- 90: Kupplungsfläche

- 91: Übertriebsrolle
- 92: Ausnehmung
- 93: Kupplungsfläche
- 94: Kupplungsfläche
- 95: Doppelpfeil

- 96: Exzenterbuchse
- 97: Schwenkbuchse
- 98: Bohrung
- 99: Schwenkwinkel
- 100: Stirnfläche

- 101: Mitnahmeschlitz
- 102: Zylinderstift
- 103: Lager
- 104: Länge
- 105a: Kupplungsteilabschnitt
- 105b: Kupplungsteilabschnitt

- 106: Aufnahmebereich
- 107: Öffnung
- 108: Treibrolle
- 109: Außenverzahnung
- 110: Innenverzahnung

- 111: Zwischenrad
- 112: Achse
- 113: Halteflansch
- 114: Stellhebel
- 115: Schwenkwinkel

- 116: Wandung
- 117: Übertragungselement
- 118: Übertragungselement
- 119: Übertragungselement
- 120: Flansch

- 121: Innenverzahnung
- 122: Ringsteg
- 123: Außenverzahnung
- 124: Radialrichtung
- 125: Kulissenbahn

- 126: Kulissenstein
- 127: Käfig
- 128: Grundstellung
- 129: Betriebsstellung

## Patentansprüche

1. Rollenanordnung (7) für das Fördern eines Stückgutes (18) entlang eines Staurollenförderers (1), mit einer in einem Tragrahmen (4) des Staurollenförderers (1) angeordneten feststehenden Rollenachse (20), auf der eine Antriebsrolle (9) und eine antreibbare und gegebenenfalls bremsbare Förderrolle (10) drehbar gelagert ist, sowie mit einer zwischen diesen angeordneten mechanisch betätigbaren Kupplungseinrichtung (12), insbesondere eine Reibkupplung, mit über eine Verstellvorrichtung (13) relativ zueinander verstellbaren Kupplungsteilen (14, 15), wobei zumindest einer der Kupplungsteile (14, 15) von einer eingerückten Schaltstellung in eine ausgerückte Schaltstellung entgegen der Wirkung von zumindest einem Federelement (36) auf der Rollenachse (20) axial verstellbar angeordnet und der erste Kupplungsteil (14) mit der Förderrolle (10) und der weitere Kupplungsteil (15) mit der Antriebsrolle (9) antriebsverbunden ist, und einander zugewandte Kupplungsflächen (43, 44) der Kupplungsteile (14, 15) in der eingerückten Schaltstellung mit einer Andruckkraft gegeneinander abgestützt sind, **dadurch gekennzeichnet, dass** zwischen der Förderrolle (10) und dem auf der Rollenachse (20) verstellbaren ersten Kupplungsteil (14) eine selbstnachstellende Stellvorrichtung (47) angeordnet ist, die zumindest zwei über eine Verzahnung (49) miteinander in Eingriff befindliche und in zur Rollenachse (20) axialer Richtung und/oder Umfangsrichtung gegeneinander verstellbare Übertragungselemente (42, 48; 117, 118) aufweist und dass der erste Kupplungsteil (14) bei einer Relativbewegung zwischen der Förderrolle (10) und dem ersten Kupplungsteil (14) in deren Umfangsrichtung in zur Rollenachse (20) axialer Richtung auf den weiteren Kupplungsteil (15) zu selbsttätig verstellt und die Kupplungsfläche (43) des ersten Kupplungsteiles (14) mit einer in Abhängigkeit vom Gewicht des von der Förderrolle (10) transportierten Stückgutes (18) eingestellten Andruckkraft gegen die Kupplungsfläche (44) des weiteren Kupplungsteiles (15) bis zum Erreichen eines schlupffreien Reibeingriffes zwischen den beiden Kupplungsteilen (14, 15) angepreßt wird.

2. Rollenanordnung nach Anspruch 1, **dadurch gekennzeichnet, dass** das erste Übertragungselement (42; 118) mit dem ersten Kupplungsteil (14) und das zweite Übertragungselement (48; 117) mit der Förderrolle (10) gekoppelt bzw. bewegungsverbunden ist.

3. Rollenanordnung nach Anspruch 1 oder 2, **dadurch gekennzeichnet, dass** die Stellvorrichtung (47) über eine Verzahnung (49) miteinander in Eingriff befindliche und in zur Rollenachse (20) axialer Richtung und Umfangsrichtung gegeneinander verstellbare, mechanische Übertragungselemente (42, 48) aufweist und dass Keilflanken (58) der Verzahnung (49) winkelig zur Rollenachse (20) oder zu einer zur Rollenachse (20) senkrechten Radialebene verlaufen.

4. Rollenanordnung nach einem der Ansprüche 1 bis 3, **dadurch gekennzeichnet, dass** zumindest ein erstes Übertragungselement (42) koaxial innerhalb eines mit der antreib- und gegebenenfalls bremsbaren Förderrolle (10) bewegungsfest verbundenen, weiteren Übertragungselement (48) angeordnet und mit diesem über die Verzahnung (49) in Umfangsrichtung der Übertragungselemente (42, 48) und in zur Rollenachse (20) axialer Richtung gegeneinander verschiebbar verbunden sind.

5. Rollenanordnung nach einem der Ansprüche 1 bis 4, **dadurch gekennzeichnet, dass** das erste Übertragungselement (42) durch einen zylindrischen Grundkörper (50) mit einer koaxial zur Rollenachse (20) verlaufenden Durchgangsöffnung (51) gebildet und von zwei Stirnseiten (53, 54) begrenzt ist und dass am Außenumfang (52) des Grundkörpers (50) zumindest zwei, bevorzugt vier in Umfangsrichtung mit gleichem Abstand voneinander angeordnete Zahnelemente (55a) angeordnet sind.

6. Rollenanordnung nach einem der Ansprüche 1 bis 5, **dadurch gekennzeichnet, dass** das erste Übertragungselement (42) auf der Rollenachse (20) verschieb- und/oder verdrehbar gelagert und mit dem ersten Kupplungsteil (14) bewegungsfest verbunden, insbesondere einstückig mit diesem ausgebildet ist.

7. Rollenanordnung nach einem der Ansprüche 1 bis 6, **dadurch gekennzeichnet, dass** der erste Kupplungsteil (14) auf der Rollenachse (20) axial verschiebbar gelagert und über eine Verzahnung (84a, 84b) mit der Förderrolle (10) drehfest verbunden ist und die miteinander in Eingriff befindlichen und in zur Rollenachse (20) axialer Richtung und Umfangsrichtung gegeneinander verstellbaren Übertragungselemente (42, 48) über das zumindest eine vorgespannte Federelement (36), insbesondere eine Druckfeder, gegen den ersten Kupplungsteil (14) abgestützt sind.

8. Rollenanordnung nach einem der Ansprüche 1 bis 7, **dadurch gekennzeichnet, dass** die miteinander in Eingriff befindlichen Übertragungselemente (42, 48) an ihren einander zugewandten Stirnseiten (54, 61) mit jeweils wenigstens zwei, bevorzugt vier in Umfangsrichtung der Übertragungselemente (42, 48) mit gleichem Abstand voneinander angeordneten, gegensinnig axial aufeinander zugerichteten Zahnelementen (55a, 55b) versehen sind, die in Umfangsrichtung ansteigend verlaufende Keilflanken (58) aufweisen und dass zwischen den Übertragungselementen (42, 48) oder zwischen einem der Übertragungselemente (42; 48) und dem ersten Kupplungsteil (14) das zumindest eine vorgespannte Federelement (36) angeordnet ist.

9. Rollenanordnung nach einem der Ansprüche 1 bis 8, **dadurch gekennzeichnet, dass** die Zahnelemente (55a) in Richtung der Rollenachse (20) die geneigt aufeinander und geneigt zu einer Längsmittelachse (56) der Rollenachse (20) verlaufenden Keilflanken (58) aufweisen.

10. Rollenanordnung nach einem der Ansprüche 1 bis 8, **dadurch gekennzeichnet, dass** die Zahnelemente (55a) in Richtung der Rollenachse (20), die parallel zueinander und geneigt zur Längsmittelachse (56) der Rollenachse (20) verlaufenden Keilflanken (58) aufweisen.

11. Rollenanordnung nach einem der Ansprüche 1 bis 10, **dadurch gekennzeichnet, dass** das weitere Übertragungselement (48) durch einen hohlzylindrischen Grundkörper (59) und gegebenenfalls einen an diesen an einer seiner Stirnseiten (60, 61) angeordneten Boden (62) gebildet ist und dass der Boden (62) eine koaxial zur Rollenachse (20) verlaufende Bohrung (63) aufweist und am Innenumfang (64) in Umfangsrichtung des Übertragungselementes (48) mit gleichem Abstand voneinander angeordnete, zu den Zahnelementen (55a) komplementär ausgebildete und umfangsmäßig begrenzte verdrallte Längsnuten (65) vertieft angeordnet sind.

12. Rollenanordnung nach einem der Ansprüche 1 bis 11, **dadurch gekennzeichnet, dass** das weitere Übertragungselement (48) durch einen scheibenartigen Grundkörper (59) gebildet und in diesem eine koaxial zur Rollenachse (20) verlaufende Ausnehmung angeordnet ist, in der ein Lager (30) für die Förderrolle (10) eingesetzt ist und dass an der dem ersten Übertragungselement (42) zugewandten Stirnseite (61) die axial vorstehenden Zahnelemente (55b) ausgebildet sind.

13. Rollenanordnung nach Anspruch 11, **dadurch gekennzeichnet, dass** die Längsnuten (65) in Richtung der Rollenachse (20) geneigt aufeinander und geneigt zur Längsmittelachse (56) der Rollenachse (20) verlaufende Keilflanken (66) aufweist.

14. Rollenanordnung nach Anspruch 11, **dadurch gekennzeichnet, dass** die Längsnuten (65) in Richtung der Rollenachse (20) parallel zueinander und geneigt zur Längsmittelachse (56) der Rollenachse (20) verlaufende Keilflanken (66) aufweist.

15. Rollenanordnung nach einem der Ansprüche 1 bis 14, **dadurch gekennzeichnet, dass** die Keilflanke (58, 66) mit der Längsmittelachse (56) oder der Radialebene einen Winkel (67) größer 0°, insbesondere zwischen 5° und 50°, beispielsweise 30°, einschließt.

16. Rollenanordnung nach Anspruch 11, **dadurch gekennzeichnet, dass** eine Überdeckungslänge (81) der nach der Art einer Schraubenlinie ineinander geführten Übertragungselemente (42, 48) zumindest einem doppelten, bevorzugt einem mehrfachen eines axialen Verstellweges des von einer mit dem weiteren Kupplungsteil (15) in Antriebsverbindung stehenden, eingerückten Schaltstellung in eine ausgerückte Schaltstellung verstellbaren ersten Kupplungsteiles (14) entspricht.

17. Rollenanordnung nach Anspruch 11 oder 12, **dadurch gekennzeichnet, dass** das weitere Übertragungselement (48) topfartig ausgebildet ist und am Boden (62) eine Lageraufnahmestelle für das Lager (30) der Förderrolle (10) ausbildet.

18. Rollenanordnung nach einem der Ansprüche 1 bis 7, **dadurch gekennzeichnet, dass** das erste Übertragungselement (42) an der dem weiteren Übertragungselement (48) zugekehrten Stirnseite (54) eine koaxial zur Rollenachse (20) ausgebildete Ausnehmung (69) für die bereichsweise Aufnahme des Federelementes (36) aufweist.

19. Rollenanordnung nach einem der Ansprüche 1 bis 18, **dadurch gekennzeichnet, dass** zwischen der Förderrolle (10) oder dem weiteren Übertragungselement (48) und dem auf der Rollenachse (20) verschiebbaren ersten Übertragungselement (42) und/oder dem ersten Kupplungsteil (14) eine Bremseinrichtung (72) angeordnet ist und dass die Bremseinrichtung (72) einen Bremsfortsatz (73) und einen Bremsklotz (74) aufweist.

20. Rollenanordnung nach Anspruch 19, **dadurch gekennzeichnet, dass** das verschiebbare erste Übertragungselement (42) und/oder der erste Kupplungsteil (14) den Bremsfortsatz (73) aufweist, der mit dem auf der Rollenachse (20) und/oder an einer inneren Mantelfläche der Förderrolle (10) festsitzenden Bremsklotz (74) in Reibeingriff bringbar ist und dass der Bremsfortsatz (73) und der Bremsklotz (74) mit konischen Bremsflächen (75) versehen sind.

21. Rollenanordnung nach Anspruch 19 oder 20, **dadurch gekennzeichnet, dass** der Bremsfortsatz (73) eine Führung für das zumindest eine Federelement (36) ausbildet.

22. Rollenanordnung nach einem der Ansprüche 1 bis 19, **dadurch gekennzeichnet, dass** auf der Rollenachse (20) ein in axialer Richtung gleitbeweglich gelagertes und eine Schaltkraft der Verstellvorrichtung (13) übertragendes Schaltelement (27) angeordnet ist und dass das Schaltelement (27) gegen den ersten Kupplungsteil (14) abgestützt ist.

23. Rollenanordnung nach einem der Ansprüche 1 bis 22, **dadurch gekennzeichnet, dass** der gegebenenfalls mit dem ersten Übertragungselement (42) einstückig verbundene, erste Kupplungsteil (14) eine sich in Richtung der Antriebsrolle (9) konisch verjüngende Kupplungsfläche (43) aufweist und dass ein Öffnungswinkel (45) zwischen 5° und 50°, beispielsweise 30°, beträgt.

24. Rollenanordnung nach einem der Ansprüche 1 bis 23, **dadurch gekennzeichnet, dass** die Antriebsrolle (9) eine den weiteren Kupplungsteil (15) bildende Ausnehmung mit konischer Kupplungsfläche (44) aufweist und dass ein Öffnungswinkel (45) zwischen 5° und 50°, beispielsweise 30°, beträgt.

25. Rollenanordnung nach einem der Ansprüche 1 bis 24, **dadurch gekennzeichnet, dass** die Stellvorrichtung (47) über eine Verzahnung (49) miteinander in Eingriff befindliche und in zur Rollenachse (20) axialer Richtung gegeneinander verstellbare, mechanische Übertragungselemente (117, 118) und ein koaxial zur Rollenachse (20) angeordnetes drittes Übertragungselement (119) aufweist und die einander benachbarten zweiten und dritten Übertragungselemente (117, 119) an ihren einander zugewandten Stirnseiten (54, 61) mit in diesen vertieft angeordneten, radial umlaufenden, im Querschnitt kreisbogenförmigen, jeweils der Stirnseite (54; 61) zugewandt konvex verlaufenden und in Radialrichtung der Übertragungselemente (117, 119) zueinander versetzten Kulissenbahnen (125) ausgebildet sind, zwischen denen in der Radialrichtung wenigstens ein verstellbarer Kulissenstein (126) angeordnet sind.

26. Rollenanordnung nach Anspruch 25, **dadurch gekennzeichnet, dass** der erste Kupplungsteil (14) das erste Übertragungselement (118) ausbildet und einen Ringsteg (122) mit einer parallel zur Rollenachse (20) verlaufenden Außenverzahnung (123) aufweist und das zweite Übertragungselement (117) einen hohlzylindrischen Grundkörper mit einer parallel zur Rollenachse (20) verlaufenden Innenverzahnung (121) aufweist und dass das zweite Übertragungselement (117) auf dem ersten Übertragungselement (118) axial verschiebbar angeordnet ist.

27. Rollenanordnung nach Anspruch 25 oder 26, **dadurch gekennzeichnet, dass** das zumindest eine Federelement (36) zwischen dem ersten Kupplungsteil (14) und zweiten Übertragungselement (117) vorgespannt angeordnet ist.

28. Rollenanordnung (7) für einen Staurollenförderer (1), mit einer in einem Tragrahmen (2) des Staurollenförderers (1) angeordneten, feststehenden Rollenachse (20), auf der eine Antriebsrolle (9) und eine antreibbare und gegebenenfalls bremsbare Förderrolle (10) drehbar gelagert ist, sowie einer zwischen diesen angeordneten, mechanischen Kupplungseinrichtung (12) mit über eine Verstellvorrichtung (13) relativ zueinander verstellbaren Kupplungsteilen (87, 88, 89), **dadurch gekennzeichnet, dass** der erste Kupplungsteil (87) durch die Förderrolle (10) mit einer zur Längsmittelachse (56) der Rollenachse (20) konzentrischen Kupplungsfläche (90), der zweite Kupplungsteil (88) durch die Antriebsrolle (9) oder eine mit ihr antriebsverbundenen Treibrolle (108) und der zwischen dem ersten und zweiten Kupplungsteil (87,88) angeordnete dritte Kupplungsteil (89) durch eine Übertriebsrolle (91) gebildet ist und dass die von einer ausgerückten Schaltstellung in eine mit dem ersten Kupplungsteil (87) und den zweiten Kupplungsteil (88) mit Kupplungsflächen (90, 93) in Antriebsverbindung stehenden, eingerückten Schaltstellung verstellbare Übertriebsrolle (91) exzentrisch gelagert oder eine der Kupplungsflächen (90; 93) des ersten oder zweiten Kupplungsteiles (87; 88) exzentrisch zur Längsmittelachse (56) der Rollenachse (20) des ersten Kupplungsteiles (87) ausgebildet ist.

29. Rollenanordnung nach Anspruch 28, **dadurch gekennzeichnet, dass** die walzenartige Übertriebsrolle (91) an einem um die Rollenachse (20) verschwenkbaren Stellhebel (114) gelagert ist, der mit einem in einer Bohrung (98) in der Rollenachse (20) drehbeweglich gelagerten und eine Schaltkraft der Verstellvorrichtung (13) übertragenden, stabförmigen Schaltelement (27) verbunden ist.

30. Rollenanordnung nach Anspruch 28, **dadurch gekennzeichnet, dass** die hohlzylindrische, walzenartige Übertriebsrolle (91) auf einer Schwenkbuchse (97) drehbar gelagert ist und dass die Schwenkbuchse (97) auf einer an der Rollenachse (20) befestigten Exzenterbuchse (96) in deren Umfangsrichtung verstellbar, insbesondere gleitbeweglich auf der Exzenterbuchse (96) angeordnet und mit einem in einer Bohrung (98) in der Rollenachse (20) verdrehbeweglich gelagerten und eine Schaltkraft der Verstellvorrichtung (13) übertragenden, stabförmigen Schaltelement (27) verbunden ist.

31. Rollenanordnung nach Anspruch 28 oder 30, **dadurch gekennzeichnet, dass** ein Außendurchmesser der Übertriebsrolle (91) geringfügig kleiner bemessen ist als ein Innendurchmesser der Antriebs- oder Förderrolle (9, 10).

32. Rollenanordnung nach Anspruch 31, **dadurch gekennzeichnet, dass** die Antriebsrolle (9) eine den zweiten Kupplungsteil (88) bildende Ausnehmung (92) mit einer zur Längsmittelachse (56) der Rollenachse (20) konzentrischen Kupplungsfläche (93) aufweist.

33. Rollenanordnung nach einem der Ansprüche 28 bis 32, **dadurch gekennzeichnet, dass** ein den Verstellweg der Übertriebsrolle (91) begrenzender und zwischen der eingerückten und ausgerückten Schaltstellung bemessener Schwenkwinkel (115) zwischen 10° und 30°, insbesondere zwischen 15° und 25°, beispielsweise 17°, beträgt.

34. Staurollenförderer (1) mit einer Vielzahl von in einem Tragrahmen (2) gehaltenen Rollen (6, 9, 10), die mehreren Förderzonen (5a bis 5d) zugeordnet sind und in jeder Förderzone (5a bis 5d) eine Rollenanordnung (7) angeordnet ist, die mit den weiteren Rollen (6) derselben Förderzone (5a bis 5d) gekuppelt ist, **dadurch gekennzeichnet, dass** die Rollenanordnung (7) nach einem der Ansprüche 1 bis 33 ausgebildet ist.

## Claims

1. Roller arrangement (7) for conveying piece goods (18) along an accumulating roller conveyor (1), with a stationary roller shaft (20) disposed in a support frame (4) of the accumulating roller conveyor (1), on which a drive roller (9) and a conveyor roller (10) which can be driven and braked as necessary are rotatably mounted, and having a mechanically actuatable clutch system (12) disposed between them, in particular a friction clutch, with clutch parts (14, 15) which are displaceable relative to one another by means of an adjusting mechanism (13), at least one of which clutch parts (14, 15) is disposed so that it can be axially displaced on the roller shaft (20) from an engaged switch position against the action of at least one spring element (36) into a disengaged position, and the first clutch part (14) is drivingly linked to the conveyor roller (10) and the other clutch part (15) is drivingly linked to the drive roller (9), and mutually facing clutch surfaces (43, 44) of the clutch parts (14, 15) are supported against one another by a contact pressure in the engaged switch position, **characterised in that**, disposed between the conveyor roller (10) and the first clutch part (14) which is displaceable on the roller shaft (20), is a self-adjusting setting mechanism (47) comprising at least two transmitting elements (42, 48; 117, 118) engaging with one another by means of toothing (49) and displaceable against one another in the axial direction with respect to the roller shaft (20) and/or in the circumferential direction, and when a relative movement is effected between the conveyor roller (10) and the first clutch part (14) in the circumferential direction the first clutch part (14) is automatically displaced towards the other clutch part (15) in the axial direction relative to the roller shaft (20), and the clutch surface (43) of the first clutch part (14) is pressed against the clutch surface (44) of the other clutch part (15) with a contact pressure which is set depending on the weight of the piece goods (18) being conveyed by the conveyor roller (10) until a slip-free friction engagement is obtained between the two clutch parts (14, 15).

2. Roller arrangement as claimed in claim 1, **characterised in that** the first transmitting element (42; 118) is coupled or drivingly connected to the first clutch part (14) and the second transmitting element (48; 117) is coupled or drivingly connected to the conveyor roller (10).

3. Roller arrangement as claimed in claim 1 or 2, **characterised in that** the setting mechanism (47) has transmitting elements (42, 48) which engage with one another by means of toothing (49) and are mechanically displaceable against one another in the axial direction with respect to the roller shaft (20) and in the circumferential direction, and V-grooves (58) of the toothing (49) extend at an angle to the roller shaft (20) or to a radial plane perpendicular to the roller shaft (20).

4. Roller arrangement as claimed in one of claims 1 to 3, **characterised in that** at least a first transmitting element (42) is disposed coaxially inside another transmitting element (48) and are joined in displacement to the conveyor roller (10), which can be driven and as necessary braked, and are connected to it via the toothing (49) so as to be displaceable one against the other in the circumferential direction of the transmitting elements (42, 48) and in the axial direction with respect to the roller shaft (20).

5. Roller arrangement as claimed in one of claims 1 to 4, **characterised in that** the first transmitting element (42) is provided in the form of a cylindrical base body (50) with an orifice (51) extending coaxially with the roller shaft (20) and bounded by two end faces (53, 54), and at least two, preferably four, tooth elements (55a) are disposed on the external circumference (52) of the base body (50) at an identical distance apart from one another in the circumferential direction.

6. Roller arrangement as claimed in one of claims 1 to 5, **characterised in that** the first transmitting element (42) is mounted so as to be displaceable and/or rotatable on the roller shaft (20) and is connected so that it is moves with the first clutch part (14), in particular is an integral part of the latter.

7. Roller arrangement as claimed in one of claims 1 to 6, **characterised in that** the first clutch part (14) is mounted so as to be axially displaceable on the roller shaft (20) and is fixedly connected by means of toothing (84a, 84b) to the conveyor roller (10) so as to rotate therewith, and the mutually engaged transmitting elements (42, 48) which are displaceable one against the other in the axial direction with respect to the roller shaft (20) and in the circumferential direction are supported against the first clutch part (14) by means of at least one pre-tensioned spring element (36), in particular a compression spring.

8. Roller arrangement as claimed in one of claims 1 to 7, **characterised in that** the mutually facing end faces (54, 61) of the mutually engaged transmitting elements (42, 48) are provided respectively with at least two, preferably four, tooth elements (55a, 55b) spaced at an identical distance apart from one another in the circumferential direction of the transmitting elements (42, 48) and directed towards one another in axially opposite directions with V-flanks (58) rising in the circumferential direction, and the at least one pre-tensioned spring element (36) is disposed between the transmitting elements (42, 48) or between one of the transmitting elements (42; 48) and the first clutch part (14).

9. Roller arrangement as claimed in one of claims 1 to 8, **characterised in that** the tooth elements (55a) have V-flanks (58) extending at an angle towards one another in the direction of the roller shaft (20) and at an angle to a longitudinal mid-axis (56) of the roller shaft (20).

10. Roller arrangement as claimed in one of claims 1 to 8, **characterised in that** the tooth elements (55a) have V-flanks (58) extending in the direction of the roller shaft (20), parallel with one another and at an angle with respect to the longitudinal mid-axis (56) of the roller shaft (20).

11. Roller arrangement as claimed in one of claims 1 to 10, **characterised in that** the other transmitting element (48) is provided in the form of a hollow cylindrical base body (59), optionally having a base (62) disposed on one of its end faces (60, 61) and the base (62) has a bore (63) extending coaxially with the roller shaft (20) and the transmitting element (48) has twisted, peripherally bounded longitudinal grooves (65) recessed into the internal circumference (64) disposed at an identical distance apart, which complement the tooth elements (55a).

12. Roller arrangement as claimed in one of claims 1 to 11, **characterised in that** the other transmitting element (48) is provided in the form of a disc-type base body (59) with a recess extending through it coaxially with the roller shaft (20) in which a bearing (30) for the conveyor roller (10) is inserted, and axially projecting tooth elements (55b) are provided on the end face (61) directed towards the first transmitting element (42).

13. Roller arrangement as claimed in claim 11, **characterised in that** the longitudinal grooves (65) have V-flanks (66) extending towards one another at an angle in the direction of the roller shaft (20) and at an angle to the longitudinal mid-axis (56) of the roller shaft (20).

14. Roller arrangement as claimed in claim 11, **characterised in that** the longitudinal grooves (65) have V-flanks (66) extending parallel with one another in the direction of the roller shaft (20) and at an angle with respect to the longitudinal mid-axis (56) of the roller shaft (20).

15. Roller arrangement as claimed in one of claims 1 to 14, **characterised in that** the V-flanks (58, 66) subtend an angle (67) greater than 0°, in particular between 5° and 50°, for example 30°, with the longitudinal mid-axis (56) or radial plane.

16. Roller arrangement as claimed in claim 11, **characterised in that** an overlap length (81) within which the transmitting elements (42, 48) are guided one in the other in a screw pattern is at least twice, preferably a multiple of an axial displacement path by means of which the first clutch part (14) drivingly linked to the other clutch part (15) can be displaced from an engaged switch position into a disengaged switch position.

17. Roller arrangement as claimed in claim 11 or 12, **characterised in that** the other transmitting element (48) is of a pot-shaped design and has a bearing point for the bearing (30) of the conveyor roller (10) on the base (62).

18. Roller arrangement as claimed in one of claims 1 to 7, **characterised in that** the first transmitting element (42) has a recess (69) coaxial with the roller shaft (20) on the end face (54) directed towards the other transmitting element (48) for accommodating certain regions of the spring element (36).

19. Roller arrangement as claimed in one of claims 1 to 18, **characterised in that** a brake mechanism (72) is disposed between the conveyor roller (10) or the other transmitting element (48) and the first transmitting element (42) displaceable on the roller shaft (20) and/or the first clutch part (14) and the brake mechanism (72) has a brake projection (73) and a brake block (74).

20. Roller arrangement as claimed in claim 19, **characterised in that** the displaceable first transmitting element (42) and/or the first clutch part (14) incorporates the brake projection (73) which can be moved into a friction engagement with the brake block (74) fixedly seated on the roller shaft (20) and/or on an internal surface of the conveyor roller (10), and the brake projection (73) and the brake block (74) are provided with conical brake surfaces (75).

21. Roller arrangement as claimed in claim 19 or 20, **characterised in that** the brake projection (73) constitutes a guide for the at least one spring element (36).

22. Roller arrangement as claimed in one of claims 1 to 19, **characterised in that** a switch element (27) which is mounted so as to be slidable in the axial direction and transmit a switching force to the adjusting mechanism (13) is disposed on the roller shaft (20) and the switch element (27) is supported against the first clutch part (14).

23. Roller arrangement as claimed in one of claims 1 to 22, **characterised in that** the first clutch part (14) which may optionally be integrally joined to the first transmitting element (42) has a clutch surface (43) which tapers in a conical arrangement in the direction of the drive roller (9) with an opening angle (45) of between 5° and 50°, for example 30°.

24. Roller arrangement as claimed in one of claims 1 to 23, **characterised in that** the drive roller (9) has a recess forming the other clutch part (15) with a conical clutch surface (44) and the opening angle (45) is between 5° and 50°, for example 30°.

25. Roller arrangement as claimed in one of claims 1 to 24, **characterised in that** the adjusting mechanism (47) has mechanical transmitting elements (117, 118), which engage with one another by means of toothing (49) and are axially displaceable one against the other in the axial direction with respect to the roller shaft (20), and a third transmitting element (119) disposed coaxially with the roller shaft (20), and the mutually facing end faces (54, 61), of the mutually adjacent second and third transmitting elements (117, 119) have, recessed into them, radially extending convex slide tracks (125) with an arcuate cross-section directed towards the respective end face (54; 61) and offset from one another in the radial direction of the transmitting elements (117, 119), between which at least one displaceable slide block (126) is disposed in the radial direction.

26. Roller arrangement as claimed in claim 25, **characterised in that** the first clutch part (14) constitutes the first transmitting element (118) and has an annular web (122) with external toothing (123) extending parallel with the roller shaft (20) and the second transmitting element (117) has a hollow cylindrical base body with internal toothing (121) extending parallel with the roller shaft (20), and the second transmitting element (117) is disposed on the first transmitting element (118) so as to be axially displaceable.

27. Roller arrangement as claimed in claim 25 or 26, **characterised in that** the at least one spring element (36) is pre-tensioned and is disposed between the first clutch part (14) and second transmitting element (117).

28. Roller arrangement (7) for an accumulating roller conveyor (1), with a stationary roller shaft (20) disposed in a support frame (2) of the accumulating roller conveyor (1) on which a drive roller (9) and a conveyor roller (10), which can be driven and braked, as necessary are rotatably mounted, as well as a mechanical clutch system (12) disposed between them comprising clutch parts (87, 88, 89) which are displaceable relative to one another by means of an adjusting mechanism (13), **characterised in that** the first clutch part (87) is formed by the conveyor roller (10) with a clutch surface (90) concentric with the longitudinal mid-axis (56) of the roller shaft (20), the second clutch part (88) is formed by the drive roller (9) or a driving roller (108) drivingly linked to it and the third clutch part (89) disposed between the first and second clutch parts (87, 88) is formed by a transmitting roller (91), and the transmitting roller (91), which can be displaced from a disengaged position into an engaged position establishing a drive connection with the first clutch part (87) and the second clutch part (88) by means of clutch surfaces (90, 93), is eccentrically mounted or one of the clutch surfaces (90; 93) of the first or second clutch part (87; 88) is disposed eccentrically with respect to the longitudinal mid-axis (56) of the roller shaft (20) of the first clutch part (87).

29. Roller arrangement as claimed in claim 28, **characterised in that** the roll-type transmitter roller (91) is mounted on an actuator lever (114), pivotable about the roller shaft (20), which is connected to a bar-shaped switch element (27) rotatably mounted in a bore (98) in the roller shaft (20) and transmits a switching force to the adjusting mechanism (13).

30. Roller arrangement as claimed in claim 28, **characterised in that** the hollow cylindrical roll-type transmitting roller (91) is rotatably mounted on a pivot bushing (97) and the pivot bushing (97) is displaceable in its circumferential direction on an eccentric bush (96) secured to the roller shaft (20), in particular is slidable on the eccentric bush (96), and is connected to a bar-shaped switch element (27) which is rotatably mounted in a bore (98) in the roller shaft (20) and transmits a switching force to the adjusting mechanism (13).

31. Roller arrangement as claimed in claim 28 or 30, **characterised in that** an external diameter of the transmitting roller (91) is slightly smaller than an internal diameter of the drive or conveyor roller (9, 10).

32. Roller arrangement as claimed in claim 31, **characterised in that** the drive roller (9) has a recess (92) forming the second clutch part (88) with a clutch surface (93) concentric with the longitudinal mid-axis (56) of the roller shaft (20).

33. Roller arrangement as claimed in one of claims 28 to 32, **characterised in that** a pivot angle (115) limiting the displacement path of the transmitting roller (91) and measured between the engaged and disengaged switch positions is between 10° and 30°, in particular between 15° and 25°, for example 17°.

34. Accumulating roller conveyor (1) with a plurality of rollers (6, 9, 10) retained in a support frame (2) assigned to various conveyor zones (5a to 5d), each conveyor zone (5a to 5d) being provided with a roller arrangement (7) which is coupled with the other rollers (6) of the same conveyor zone (5a to 5d), **characterised in that** the roller arrangement (7) is of the type as claimed in one of claims 1 to 33.

## Revendications

1. Ensemble rouleaux (7) pour le convoyage d'une marchandise de détail (18) le long d'un transporteur d'accumulation à rouleaux (1), avec un axe de rouleau fixe (20) disposé dans un châssis de support (4) du transporteur d'accumulation à rouleaux, sur lequel est logé d'une manière tournante un rouleau d'entraînement (9) et un rouleau de convoyage (10) apte à être entraîné, et le cas échéant, pouvant être freiné, et avec une installation de couplage (12) actionnable mécaniquement disposée entre ceux-ci, en particulier un couplage à friction, avec des parties de couplage (14,15) ajustables par un dispositif de déplacement (13) l'une relativement à l'autre, où au moins l'une des parties de couplage (14,15) est disposée d'une manière déplaçable axialement à partir d'une position de commutation engagée dans une position de commutation sortie contre l'effet d'au moins un élément à ressort (36) sur l'axe de rouleau (20), et la première partie de couplage (14) est reliée de façon menante au rouleau de transport (10) et l'autre partie de couplage (15) au rouleau d'entraînement (9), et des faces de couplage (43,44) orientées l'une vers l'autre des parties de couplage (14,15), dans la position de commutation engagée, s'appuient avec une force de pression l'une contre l'autre, **caractérisé en ce qu'**il est disposé entre le rouleau de transport (10) et la première partie de couplage (14) ajustable sur l'axe de rouleau (20) un dispositif de positionnement (47) à auto-rattrapage qui présente au moins deux éléments de transmission (42,48; 117,118) en prise par une denture (49) et ajustables mutuellement dans la direction axiale à l'axe de rouleau (20) et/ou dans la direction périphérique, et **en ce que** la première partie de couplage (14), lors d'un mouvement relatif entre le rouleau de transport (10) et la première partie de couplage (14) dans leur direction périphérique, s'ajuste automatiquement dans la direction axiale à l'axe de rouleau (20) à l'autre partie de couplage (15), et **en ce que** la face de couplage (43) de la première partie de couplage (14) est poussée avec une force d'application réglée en fonction du poids de la marchandise de détail (18) transportée par le rouleau de transport (10) contre la face de couplage (44) de l'autre partie de couplage (15) jusqu'à l'atteinte d'une prise de friction sans glissement entre les deux parties de couplage (14,15).

2. Ensemble rouleaux selon la revendication 1, **caractérisé en ce que** le premier élément de transmission (42;118) est couplé respectivement lié en déplacement avec la première partie de couplage (14), et le deuxième élément de transmission (48;117) avec le rouleau de transport (10).

3. Ensemble rouleaux selon la revendication 1 ou 2, **caractérisé en ce que** le dispositif de positionnement (47) présente des éléments de transmission mécaniques (42,48), en prise par une denture (49) et déplaçables l'un contre l'autre dans la direction axiale à l'axe de rouleau (20) et dans la direction périphérique, et **en ce que** des flancs de coin (58) de la denture (49) s'étendent angulairement à l'axe de rouleau (20) ou à un plan radial perpendiculaire à l'axe de rouleau (20).

4. Ensemble rouleaux selon l'une des revendications 1 à 3, **caractérisé en ce qu'**au moins un premier élément de transmission (42) est disposé coaxialement à l'intérieur d'un autre élément de transmission (48) relié de manière non déplaçable à un rouleau de transport (10) apte à être entraîné et le cas échéant pouvant être freiné, et sont reliés d'une manière déplaçable l'un contre l'autre par la denture (49) dans la direction périphérique des éléments de transmission (42,48) et dans la direction axiale à l'axe de rouleau (20).

5. Ensemble rouleaux selon l'une des revendications 1 à 4, **caractérisé en ce que** le premier élément de transmission (42) est formé par un corps de base cylindrique (50) avec une ouverture traversante (51) s'étendant coaxialement à l'axe de rouleau (20) et est délimité par deux côtés frontaux (53,54), et **en ce que** sont disposés au pourtour extérieur (52) du corps de base (50) au moins deux, de préférence quatre éléments dentés (55a) espacés uniformément les uns des autres dans la direction périphérique.

6. Ensemble rouleaux selon l'une des revendications 1 à 5, **caractérisé en ce que** le premier élément de transmission (42) est logé sur l'axe de rouleau (20) d'une manière déplaçable et/ou tournante et est relié de manière non déplaçable à la première partie de couplage (14), en particulier est réalisé en une pièce avec celle-ci.

7. Ensemble rouleaux selon l'une des revendications 1 à 6, **caractérisé en ce que** la première partie de couplage (14) est logée d'une manière déplaçable axialement sur l'axe de rouleau (20) et est reliée d'une manière non tournante par une denture (84a,84b) au rouleau de transport (10), et **en ce que** les éléments de transmission (42,48) en prise et déplaçables dans la direction axiale à l'axe de rouleau (20) et dans la direction périphérique l'un contre l'autre s'appuient, par au moins un élément à ressort précontraint (36), en particulier un ressort de pression, sur la première partie de couplage (14).

8. Ensemble rouleaux selon l'une des revendications 1 à 7, **caractérisé en ce que** les éléments de transmission en prise (42,48) présentent à leurs côtés frontaux (54,61) orientés l'un vers l'autre à chaque fois au moins deux, de préférence quatre éléments dentés (55a,55b) espacés uniformément dans la direction périphérique des éléments de transmission (42,48), orientés en sens inverse axialement les uns vers les autres, qui présentent des flancs de coin (58) remontant dans la direction périphérique, et **en ce qu'**au moins un élément à ressort précontraint (36) est disposé entre les éléments de transmission (42,48) ou entre l'un des éléments de transmission (42,48) et la première partie de couplage (14).

9. Ensemble rouleaux selon l'une des revendications 1 à 8, **caractérisé en ce que** les éléments dentés (55a) présentent en direction de l'axe de rouleau (20) les flancs de coin (58) inclinés les uns vers les autres et inclinés vers un axe médian longitudinal (56) de l'axe de rouleau (20).

10. Ensemble rouleaux selon l'une des revendications 1 à 8, **caractérisé en ce que** les éléments dentés (55a), en direction de l'axe de rouleau (20), présentent les flancs de coin (58) s'étendant parallèlement les uns aux autres et inclinés vers l'axe médian longitudinal (56) de l'axe de rouleau (20).

11. Ensemble rouleaux selon l'une des revendications 1 à 10, **caractérisé en ce que** l'autre élément de transmission (48) est formé par un corps de base cylindrique creux (59) et le cas échéant un fond (62) disposé à celui-ci à l'un de ses côtés frontaux (60,61), et **en ce que** le fond (62) présente un perçage (63) s'étendant coaxialement à l'axe de rouleau (20), et que sont ménagées des rainures longitudinales (65) disposées au pourtour intérieur (64) d'une manière équidistante dans la direction périphérique de l'élément de transmission (48), réalisées d'une manière complémentaire aux éléments dentés (55a) et torsadées d'une manière limitée sur le pourtour.

12. Ensemble rouleaux selon l'une des revendications 1 à 11, **caractérisé en ce que** l'autre élément de transmission (48) est formé par un corps de base en forme de disque (59) et que dans celui-ci, un évidement s'étendant coaxialement à l'axe de rouleau (20) est disposé dans lequel est placé un palier (30) pour le rouleau de transport (10), et **en ce que** les éléments dentés (55b) faisant saillie axialement sont réalisés au côté frontal (61) orienté vers le premier élément de transmission (42).

13. Ensemble rouleaux selon la revendication 11, **caractérisé en ce que** les rainures longitudinales (65) présentent des flancs de coin (66) inclinés en direction de l'axe de rouleau (20) les uns vers les autres et inclinés vers l'axe médian longitudinal (56) de l'axe de rouleau (20).

14. Ensemble rouleaux selon la revendication 11, **caractérisé en ce que** les rainures longitudinales (65), dans la direction de l'axe de rouleau (20), présentent des flancs de coin (66) s'étendant parallèlement les uns aux autres et inclinés vers l'axe médian longitudinal (56) de l'axe de rouleau (20).

15. Ensemble rouleaux selon l'une des revendications 1 à 14, **caractérisé en ce que** le flanc de coin (58,66) forme avec l'axe médian longitudinal (56) ou le plan radial, un angle (67) plus grand que 0°, en particulier entre 5° et 50°, par exemple de 30°.

16. Ensemble rouleaux selon la revendication 11, **caractérisé en ce qu'**une longueur de recouvrement (81) des éléments de transmission (42,48) guidés à la manière d'une hélice l'un dans l'autre correspond au moins à un chemin de déplacement axial double, de préférence multiple, de la première partie de couplage (14), d'une position de commutation engagée, en prise d'entraînement avec l'autre partie de couplage (15), dans une position de commutation sortie.

17. Ensemble rouleaux selon la revendication 11 ou 12, **caractérisé en ce que** l'autre élément de transmission (48) est réalisé en forme de pot et forme au fond (62) un emplacement de réception pour le palier (30) du rouleau de transport (10).

18. Ensemble rouleaux selon l'une des revendications 1 à 7, **caractérisé en ce que** le premier élément de transmission (42) présente au côté frontal (54) orienté vers l'autre élément de transmission (48) un évidement (69) réalisé coaxialement à l'axe de rouleau (20) pour la réception par zones de l'élément à ressort (36).

19. Ensemble rouleaux selon l'une des revendications 1 à 18, **caractérisé en ce qu'**il est disposé entre le rouleau de transport (10) ou l'autre élément de transmission (48) et le premier élément de transmission (42) déplaçable sur l'axe de rouleau (20) et/ou la première partie de couplage (14) une installation de freinage (72), et que l'installation de freinage (72) présente un prolongement de freinage (73) et une cale de freinage (74).

20. Ensemble rouleaux selon la revendication 19, **caractérisé en ce que** le premier élément de transmission déplaçable (42) et/ou la première partie de couplage (14) présente le prolongement de freinage (73) qui peut être mis en prise de friction avec la cale de freinage (74) fixée sur l'axe de rouleau (20) et/ou à une face d'enveloppe intérieure du rouleau de transport (10), et **en ce que** le prolongement de freinage (73) et la cale de freinage (74) présentent des faces de freinage coniques (75).

21. Ensemble rouleaux selon la revendication 19 ou 20, **caractérisé en ce que** le prolongement de freinage (73) constitue un guidage pour l'élément à ressort (36).

22. Ensemble rouleaux selon l'une des revendications 1 à 19, **caractérisé en ce que** sur l'axe de rouleau (20) est disposé un élément de commutation (27) apte à glisser dans la direction axiale et transférant une force de commutation du dispositif d'ajustement (13), et **en ce que** l'élément de commutation (27) s'appuie sur la première partie de couplage (14).

23. Ensemble rouleaux selon l'une des revendications 1 à 22, **caractérisé en ce que** la première partie de couplage (14) reliée le cas échéant en une pièce au premier élément de transmission (42) présente une face de couplage (43) retrécissant d'une manière conique en direction du rouleau d'entraînement (9), et **en ce qu'**un angle d'ouverture (45) est compris entre 5° et 50°, et qu'il est, par exemple, de 30°.

24. Ensemble rouleaux selon l'une des revendications 1 à 23, **caractérisé en ce que** le rouleau d'entraînement (9) présente un évidemment formant l'autre partie de couplage (15) avec une face de couplage conique (44), et **en ce qu'**un angle d'ouverture (45) est compris entre 5° et 50°, et qu'il est, par exemple, de 30°.

25. Ensemble rouleaux selon l'une des revendications 1 à 24, **caractérisé en ce que** le dispositif de positionnement (47) présente des éléments de transmission mécaniques (117,118) en prise par une denture (49) et ajustables dans la direction axiale à l'axe de rouleau (20) l'un contre l'autre ainsi qu'un troisième élément de transmission (119) disposé coaxialement à l'axe de rouleau (20), et **en ce que** les deuxième et troisième éléments de transmission avoisinants (117,119) présentent à leurs côtés frontaux (54,61) orientés l'un vers l'autre des voies à coulisse (125) creusées dans ceux-ci, s'étendant radialement, en section transversale en forme d'arc de cercle, s'étendant à chaque fois d'une manière convexe relativement aux côtés frontaux (54;61) et décalées les unes des autres dans la direction radiale des éléments de transmission (117,119), entre lesquelles sont disposées dans la direction radiale au moins un coulisseau déplaçable (126).

26. Ensemble rouleaux selon la revendication 25, **caractérisé en ce que** la première partie de couplage (14) constitue le premier élément de transmission (118) et présente une baguette annulaire (122) avec une denture extérieure (123) s'étendant parallèlement à l'axe de rouleau (20), et **en ce que** le deuxième élément de transmission (117) présente un corps de base cylindre creux avec une denture intérieure (121) s'étendant parallèlement à l'axe de rouleau (20), et **en ce que** le deuxième élément de transmission (117) est disposé d'une manière déplaçable axialement sur le premier élément de transmission (118).

27. Ensemble rouleaux selon la revendication 25 ou 26, **caractérisé en ce qu'**au moins un élément à ressort (36) est disposé avec une précontrainte entre la première partie de couplage (14) et le deuxième élément de transmission (117).

28. Ensemble rouleaux (7) pour un transporteur d'accumulation à rouleaux (1), avec un axe de rouleau fixe (20) disposé dans un châssis de support (2) du transporteur d'accumulation à rouleaux, sur lequel est logé d'une manière tournante un rouleau d'entraînement (9) et un rouleau de transport (10) apte à être entraîné et le cas échéant pouvant être freiné, et avec une installation de couplage mécanique (12) disposée entre ceux-ci, avec des parties de couplage (87,88,89), déplaçables les unes relativement aux autres par un dispositif de déplacement (13), **caractérisé en ce que** la première partie de couplage (87) est formé par le rouleau de transport (10) avec une face de couplage (90) concentrique à l'axe médian longitudinal (56) de l'axe de rouleau (20), la deuxième partie de couplage (88) par le rouleau d'entraînement (9) ou un rouleau menant (108) relié d'une manière menante à celui-ci, et la troisième partie de couplage (89) disposée entre les première et deuxième parties de couplage (87,88) par un rouleau de dépassement (91), et **en ce que** le rouleau de dépassement (91) déplaçable d'une position de commutation sortie en une position de commutation engagée, en prise d'entraînement avec la première partie de couplage (87) et la deuxième partie de couplage (88) avec des faces de couplage (90,93) est logé d'une manière excentrique, ou bien qu'une des faces de couplage (90,93) de la première ou deuxième partie de couplage (87,88) est réalisée d'une manière excentrique à l'axe médian longitudinal (56) de l'axe de rouleau (20) de la première partie de couplage (87).

29. Ensemble rouleaux selon la revendication 28, **caractérisé en ce que** le rouleau de dépassement en forme de cylindre (91) est logé à un levier de positionnement (114) apte à pivoter autour de l'axe de rouleau (20), qui est relié à un élément de commutation en forme de tige (27) logé d'une manière tournante dans un perçage (98) dans l'axe de rouleau (20) et transmettant une force de commutation du dispositif de déplacement (13).

30. Ensemble rouleaux selon la revendication 28, **caractérisé en ce que** le rouleau de dépassement en forme de cylindre creux (91) est logé d'une manière tournante sur une douille de pivotement (97), et **en ce que** la douille de pivotement (97) est disposée sur une douille d'excentrique (96) fixée à l'axe de rouleau (20) d'une manière ajustable dans la direction périphérique de celle-ci, en particulier, d'une manière glissante sur la douille d'excentrique (96) et est reliée à un élément de commutation en forme de tige (27) logé d'une manière tournante dans un perçage (98) dans l'axe de rouleau (20) et transmettant une force de commutation du dispositif de déplacement (13).

31. Ensemble rouleaux selon la revendication 28 ou 30, **caractérisé en ce qu'**un diamètre extérieur du rouleau de dépassement (91) est légèrement plus petit qu'un diamètre intérieur du rouleau d'entraînement ou de transport (9,10).

32. Ensemble rouleaux selon la revendication 31, **caractérisé en ce que** le rouleau d'entraînement (9) présente un évidement (92) constituant la deuxième partie de couplage (88) avec une face de couplage (93) concentrique à l'axe médian longitudinal (56) de l'axe de rouleau (20).

33. Ensemble rouleaux selon l'une des revendications 28 à 32, **caractérisé en ce qu'**un angle de pivotement (115) limitant le chemin de déplacement du rouleau de dépassement (91) et calculé entre les positions de commutation engagée et sortie est compris entre 10° et 30°, en particulier entre 15° et 25°, et qu'il est par exemple, de 17°.

34. Transporteur d'accumulation à rouleaux (1) avec une pluralité de rouleaux (6,9,10) retenus dans un châssis de support (2), qui sont associés à plusieurs zones de transport (5a à 5d), et dans chaque zone de transport (5a à 5d), un ensemble rouleaux (7) est disposé qui est couplé avec les autres rouleaux (6) de la même zone de transport (5a à 5d), **caractérisé en ce que** l'ensemble rouleaux (7) est réalisé selon l'une des revendications 1 à 33.
